(19) Europäisches Patentamt
European Patent Office
Office européen des brevets

(11) EP 2 978 785 B1

(12) # EUROPÄISCHE PATENTSCHRIFT

(45) Veröffentlichungstag und Bekanntmachung des Hinweises auf die Patenterteilung:
**08.03.2017 Patentblatt 2017/10**

(21) Anmeldenummer: **14711249.4**

(22) Anmeldetag: **19.03.2014**

(51) Int Cl.:
***C08F 265/06*** (2006.01) ***C08F 285/00*** (2006.01)
***C08L 33/10*** (2006.01) ***C08L 33/12*** (2006.01)
***C08L 51/00*** (2006.01)

(86) Internationale Anmeldenummer:
**PCT/EP2014/055489**

(87) Internationale Veröffentlichungsnummer:
**WO 2014/154543 (02.10.2014 Gazette 2014/40)**

(54) **SCHLAGZÄH AUSGERÜSTETES PMMA MIT VERBESSERTEN OPTISCHEN EIGENSCHAFTEN**
IMPACT-RESISTANT PMMA WITH IMPROVED OPTICAL PROPERTIES
PMMA ÉQUIPÉ POUR RÉSISTER AUX CHOCS DOTÉ DE PROPRIÉTÉS OPTIQUES AMÉLIORÉES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **25.03.2013 EP 13160867**

(43) Veröffentlichungstag der Anmeldung:
**03.02.2016 Patentblatt 2016/05**

(73) Patentinhaber: **Evonik Röhm GmbH**
**64293 Darmstadt (DE)**

(72) Erfinder:
- **HÖSS, Werner**
  **64409 Messel (DE)**
- **KHRENOV, Victor**
  **60486 Frankfurt (DE)**
- **MÜLLER, Reiner**
  **64584 Biebesheim (DE)**
- **DÖSSEL, Lukas Friedrich**
  **64295 Darmstadt (DE)**
- **STÖRKLE, Dominic**
  **64293 Darmstadt (DE)**

(56) Entgegenhaltungen:
**DE-A1- 10 260 089**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 978 785 B1

## Beschreibung

Die Erfindung betrifft eine schlagzäh ausgerüstete Formmasse, insbesondere schlagzähes PMMA mit verbesserten optischen Eigenschaften bei erhöhten Temperaturen, daraus erhältliche Formartikel sowie die Verwendung der Formmasse und der Formartikel.

Es ist bereits seit langem bekannt, dass die Schlagzähigkeit von Formmassen, insbesondere von Poly(meth)acrylat-Formmassen, verbessert werden kann, indem man der Formmasse eine geeignete Menge sogenannter Schlagzähmodifizierer zusetzt. Dabei hat sich in der Technik der Einsatz von durch Emulsionspolymerisation hergestellten Schlagzähmodifizierungsmitteln, sogenannten Kern-Schale-Teilchen und/oder Kern-Schale-Schale-Teilchen durchgesetzt. Diese weisen im allgemeinen eine elastomere Phase auf, wobei bei einem Kern-Schale-Aufbau meist der Kern und bei einem Kern-Schale-Schale-Aufbau meist die auf den Kern aufgepfropfte erste Schale die elastomere Phase darstellen.

Beispielsweise offenbart das US-Patent US 3 793 402 schlagzähe Formmassen, insbesondere auf Poly(meth)acrylat-Basis, welche 90 bis 4 Gew.-% eines mehrstufigen Kern-Schale-Schale-Teilchens mit einem harten Kern, einer elastomeren ersten Schale und einer harten zweiten Schale aufweisen. Typische Hauptbestandteile des Kerns und der zweiten Schale sind Alkylmethacrylate mit 1 bis 4 Kohlenstoffatomen im Alkylrest, insbesondere Methylmethacrylat. Die erste Schale ist im Wesentlichen aus Butadien, substituierten Butadienen und/oder Alkylacrylaten mit 1 bis 8 Kohlenstoffatomen im Alkylrest aufgebaut. Sie kann jedoch auch 0 bis 49,9 Gew.-%, insbesondere 0,5 bis 30 Gew.-% copolymerisierbare Monomer-Einheiten, wie beispielsweise copolymerisierbare, monoethylenisch-ungesättigte Monomer-Einheiten, enthalten. Dabei ist gemäß US 3 793 402 die Anwesenheit von 10 bis 25 Gew.-% copolymerisierbaren, monoethylenisch-ungesättigten Monomer-Einheiten, insbesondere von Styrol, ganz besonders vorteilhaft.

Die Herstellung der Kern-Schale-Schale-Teilchen erfolgt durch mehrstufige Emulsionspolymerisation, wobei thermische Initiatoren, wie Persulfate oder Redox-Initiatorsysteme eingesetzt werden. Dabei soll die Polymerisation bei einer Temperatur im Bereich von 0 bis 125°C, insbesondere im Bereich von 30 bis 95°C erfolgen.

In ähnlicher Weise beschreibt die deutsche Patentanmeldung DE 41 21 652 A1 Schlagzähmodifizierer für thermoplastische Kunststoffe, wie Polymethylmethacrylat, bestehend aus einem wenigstens dreiphasigen Emulsionspolymerisat, enthaltend

A) einen harten Kern aus einem vernetzten Homo- oder Copolymerisat von ethylenisch-ungesättigten, radikalisch polymerisierbaren Monomeren;
B) einer in Gegenwart des Kernmaterials erzeugten Elastomerphase mit einer Glasübergangstemperatur nicht über 10°C, die aufgebaut ist aus

- a) einem Alkylester der Acrylsäure mit 1 bis 8 Kohlenstoffatomen im Alkylrest;
- b) wenigstens einem vernetzenden Comonomeren mit zwei oder mehr polymerisierbaren Doppelbindungen im Molekül;
- c) Arylalkylacrylat oder -methacrylat;
- d) einer in Gegenwart der Elastomerphase erzeugten Hartphase aus einem Homo- oder Copolymerisat von ethylenisch-ungesättigten, radikalisch polymerisierbaren Monomeren mit einer Glasübergangstemperatur von wenigstens 50°C.

Eine exemplarisch in dieser Druckschrift angeführte Formmasse (Beispiel 3) weist eine Izod-Kerbschlagzähigkeit bei Raumtemperatur von 6,2 kJ/m$^2$, bei -10°C von 4,7 kJ/m$^2$ und bei -20°C von 3,7 kJ/m$^2$ auf. Die Vicat-Erweichungstemperatur der Formmasse beträgt dabei 97°C.

Die Herstellung der Kern-Schale-Schale-Teilchen erfolgt ebenfalls mittels mehrstufiger Emulsionspolymerisation, wobei Alkali- oder Ammoniumperoxodisulfat als Initiator eingesetzt werden und die Polymerisation bei einer Temperatur im Bereich von 20 bis 100°C, beispielsweise bei 50°C, durchgeführt wird.

Die deutsche Patentanmeldung DE 41 36 993 A1 offenbart schlagzähmodifizierte Formmassen, welche 10 bis 96 Gew.-% eines Polymerisats auf Basis von Polymethylmethacrylat und 4 bis 90 Gew.-% eines mehrstufigen Kern-Schale-Schale-Teilchens enthalten, wobei für die Herstellung des Kerns und der zweiten Schale jeweils eine Monomermischung eingesetzt wird, die im Wesentlichen Methylmethacrylat enthält. Die Monomermischung für die erste Schale umfasst 60 bis 89,99 Gew.-% Acrylsäurealkylester mit 1 bis 20 Kohlenstoffatomen im Alkylrest und/oder Cycloalkylacrylate mit 5 bis 8 Kohlenstoffatomen im Cycloalkylrest und 10 bis 39,99 Gew.-% Acrylsäure-phenyl-alkylester mit 1 bis 4 Kohlenstoffatomen im Alkylrest sowie gegebenenfalls weitere Bestandteile. Der mittlere Teilchendurchmesser der Kern-Schale-Schale-Teilchen liegt im Bereich von 50 bis 1000 nm, insbesondere im Bereich von 150 bis 400 nm.

Gemäß dieser Druckschrift werden die Kern-Schale-Schale-Teilchen durch ein mehrstufiges Saatlatex-Verfahren erhalten, bei welchem man Ammonium- oder Alkaliperoxodisulfate, wie Kaliumperoxodisulfat, oder Initiatorkombinationssysteme als Polymerisationsinitiatoren einsetzt, wobei die Polymerisationstemperatur im Fall der thermischen

zu aktivierenden Ammonium-und Alkaliperoxodisulfate bei 50 bis 100°C liegen soll.

Das europäische Patent EP 0 828 772 B1 beschreibt die Schlagzähmodifizierung von Poly(meth)acrylaten mittels mehrstufiger Kern-Schale-Teilchen bzw. Kern-Schale-Schale-Teilchen, die aus einem Kern, einer ersten Schale und gegebenenfalls einer zweiten Schale bestehen und von vinylisch ungesättigten Verbindungen mit mindestens zwei gleich reaktiven Doppelbindungen frei sind. Dabei enthält der Kern ein erstes (Meth)acrylpolymer. Die erste Schale weist ein Polymer mit tiefer Glasübergangstemperatur auf, welches 0 bis 25 Gew.-%, insbesondere 5 bis 26 Gew.-%, eines styrolischen Monomers und 75 bis 100 Gew.-% eines (Meth)acrylmonomers, das ein Homopolymer mit einer Glasübergangstemperatur zwischen -75 und -5°C bildet, umfasst. Die gegebenenfalls vorhandene zweite Schale enthält ein zweites (Meth)acrylpolymer, das dem ersten (Meth)acrylpolymer entsprechen oder von ihm verschieden sein kann. Der Gesamtdurchmesser der Kern-Schale-Teilchen bzw. Kern-Schale-Schale-Teilchen liegt im Bereich von 250 bis 320 nm.

Die Herstellung der Kern-Schale-Teilchen bzw. Kern-Schale-Schale-Teilchen erfolgt wiederum durch mehrstufige Emulsionspolymerisation bei 80°C, wobei als Initiator ein Kaliumpersulfat eingesetzt wird.

Die deutsche Patentanmeldung DE 100 27 402 A1 beschreibt ein mehrphasiges teilchenförmiges Emulsionspolymerisat mit einer mittleren Teilchengröße von 50 bis 1000 nm, aus

a1. 1 bis 99 Gew.-% einer teilchenförmigen ersten Phase A1 mit einer Glasübergangstemperatur unterhalb von 0°C,
a2. 1 bis 99 Gew.-% einer zweiten Phase A2 aus den Monomeren A21, A22, A23, deren Gesamtmenge 100 mol-% ergibt, bezogen auf A2,

  a21. 1 bis 99 Mol% Einheiten eines vinylaromatischen Monomeren als Komponente A21 und
  a22. 0 bis 60 mol-% Einheiten eines ethylenisch ungesättigten Monomeren als Komponente A22,
  a23. 1 bis 50 mol-% SO2 als Komponente A23,

a3. 0 bis 80 Gew.-% einer dritten Phase mit einer Glasübergangstemperatur von mehr als 0°C als Komponente A3,

wobei die Gesamtmenge der Komponenten A1, A2 und A3 100 Gew.-% ergibt. DE 100 27 402 A1 berichtet, dass sich die resultierenden Schlagzähmodifier durch eine besonders helle Eigenfarbe auszeichnen. Auf das Trübungsverhalten wird nicht eingegangen.

Die internationale Patentanmeldung WO 2004/056893 beschreibt effiziente Verfahren zur Herstellung von Kern-Schale-Teilchen bzw. Kern-Schale-Schale-Teilchen. Als zur Schlagzähmodifizierung von Polyalkyl(meth)acrylat-Formmassen besonders geeignet werden Kern-Schale-Teilchen bzw. Kern-Schale-Schale-Teilchen mit einem Gesamtradius von 150,0 bis 250,0 nm beschrieben. Diese Schlagzähmodifizierer ermöglichen in möglichst geringen Mengen eine hinreichende Verbesserung der Kerbschlagzähigkeit einer Formmasse insbesondere bei Raumtemperatur, ohne dass gleichzeitig die anderen bedeutenden Eigenschaften der Formmasse, insbesondere der E-Modul, die Schmelzviskosität, die Vicat-Temperatur und die Strangaufweitung, merklich verschlechtert werden. Die erhaltenen Formmasse weisen eine Kerbschlagzähigkeit nach Charpy (ISO 179) bei 23°C von vorzugsweise mindestens 6,0 kJ/$m^2$ und einen Haze bei 23°C nach ASTM D 1003 (1997) von vorzugsweise maximal 2,5 % auf. Bei 80°C weisen die Formmassen jedoch deutlich schlechtere Haze-Werte, d. h. sichtbare Trübungen, auf.

Eine grundlegende Forderung an Formmassen für Produkte insbesondere für Anwendungen wie Beleuchtung und (Automobil-)Verscheibungen ist jedoch optische Klarheit auch bei erhöhter Temperatur. Dabei werden Produkte mit einem Trübwert kleiner gleich 15,0 %, insbesondere unter 10,0 % und ganz besonders unter 6,0 % gemessen mittels Hazemeter BYK Gardner Hazegard-plus gemäß ASTM D 1003 (1997), als optisch klar angesehen.

Wünschenswert für die Formmassen, die zur Herstellung von Beleuchtung und (Automobil-)Verscheibungen dienen, sind daher eine deutlich reduzierte Haze-Zunahme bei erhöhter Temperatur. Die Anforderungen nach Zähigkeit in Kombination mit optischen Eigenschaften wie hohe Transparenz bei sehr niedrigem Haze-Wert selbst bei erhöhten Temperaturen müssen daher erfüllt sein. Insbesondere beim Einsatz der Produkte in Beleuchtungsanwendungen mit Signaleinfärbungen sollte keine Farbortverschiebung aufgrund einer Trübungszunahme auftreten, was bisher den Einsatz schlagzäh modifizierter Formmassen limitierte.

Aufgabe der Erfindung war es daher eine Formmasse bereitzustellen, die eine hohe Schlagzähigkeit und ein verbessertes Trübungsverhalten aufweist.

Überraschend wurde gefunden, dass die Formmasse gemäß Anspruch 1 und die Formartikel gemäß Anspruch 14 sowie die Verwendungen gemäß den Ansprüchen 16 bis 21 die gestellte Aufgabe lösen. Bevorzugte Ausführungsformen sind in den Unteransprüchen aufgeführt.

Gegenstand des Patentes ist eine Formmasse, die jeweils bezogen auf ihr Gesamtgewicht Folgendes umfasst:

I. 10,0 bis 50,0 Gew.-%, vorzugsweise 15,0 bis 45,0 Gew.-%, weiter bevorzugt 20,0 bis 40,0 Gew.-%, mindestens eines Kern-Schale-Schale-Teilchens,
II. 1,0 bis 90,0 Gew.-%, vorzugsweise 1,0 bis 85,0 Gew.-%, weiter bevorzugt 1,0 bis 80,0 Gew.-%, mindestens

eines (Meth)acrylpolymers,

III. 0,0 bis 45 Gew.-%, vorzugsweise 0,0 bis 30 Gew.-%, bevorzugt 0,0 bis 10 Gew.-%, Styrol-Acrylnitril-Copolymere, und

IV. 0,0 bis 10,0 Gew.-% weiterer Zusatzstoffe,

wobei sich die Gewichtsprozente der Komponenten I. bis IV. zu 100,0 Gew.-% addieren und
wobei II. oder die Mischung aus II., III. und/oder IV. so gewählt ist, dass sie einen Brechungsindex aufweist, der sich aus einer Messung gemäß ASTM D 542 um nicht mehr als 0,01, vorzugsweise nicht mehr als 0,002, bevorzugt nicht mehr als 0,001 Einheiten vom Brechungsindex von I. unterscheidet.

Das Kern-Schale-Schale-Teilchen, I., ist hergestellt oder herstellbar nach einem Verfahren, bei welchem man

a) Wasser und Emulgator vorlegt,

b) 20,0 bis 45,0 Gew.-Teile einer ersten Zusammensetzung, umfassend die Komponenten A), B), C) und D), zugibt und bis zu einem Umsatz von mindestens 85,0 Gew.-%, bezogen auf das Gesamtgewicht der Komponenten A), B), C) und D), polymerisiert,

c) 35,0 bis 55,0 Gew.-Teile einer zweiten Zusammensetzung, umfassend die Komponenten E), F) und G), zugibt und bis zu einem Umsatz von mindestens 85,0 Gew.-%, bezogen auf das Gesamtgewicht der Komponenten E), F) und G), polymerisiert,

d) 10,0 bis 30,0 Gew.-Teile einer dritten Zusammensetzung, umfassend die Komponenten H), I) und J), zugibt und bis zu einem Umsatz von mindestens 85,0 Gew.-%, bezogen auf das Gesamtgewicht der Komponenten H), I) und J), polymerisiert,

wobei sich die angegebenen Gewichtsteile der Zusammensetzungen b), c) und d) zu 100,0 Gewichtsteilen addieren.

Die Verfolgung des Reaktionsfortschritts der Polymerisation in jeden Schritt kann auf bekannte Weise, beispielsweise gravimetrisch oder mittels Gaschromatographie erfolgen.

In dem Verfahren zum Erhalten von I. werden im Schritt a) bevorzugt 90,00 bis 99,99 Gew.-Teile Wasser und 0,01 bis 10,00 Gew.-Teile Emulgator vorlegt, wobei sich die angegebenen Gewichtsteile zu 100,00 Gewichtsteilen addieren.

In dem Verfahren zum Erhalten von I. können die Polymerisationen b), c) und/oder d) bei einer Temperatur im Bereich von größer 60 bis kleiner 90°C durchgeführt oder durch ein Redox-Initiator-System initiiert werden.

In einer bevorzugten Ausführungsform wird in dem Verfahren zum Erhalten von I. jede Polymerisation bei einer Temperatur im Bereich von größer 60 bis kleiner 90°C durchgeführt oder jede Polymerisation durch ein Redox-Initiator-System initiiert. Bevorzugt wird in dem Verfahren zum Erhalten von I. jede Polymerisation bei einer Temperatur im Bereich von größer 60 bis kleiner 90°C durchgeführt.

Bei dem Verfahren zum Erhalten von I. erfolgt die Polymerisation in den Schritten b) bis d) in einer weiteren Ausführungsform bei einer Temperatur im Bereich von größer 70 bis kleiner 85°C, vorzugsweise im Bereich von größer 75 bis kleiner 85°C.

Die Initiierung kann mit den für die Emulsionspolymerisation gebräuchlichen Initiatoren erfolgen. Geeignete organische Initiatoren sind beispielsweise Hydroperoxide, wie tert-Butyl-Hydroperoxid oder Cumolhydroperoxid. Geeignete anorganische Initiatoren sind Wasserstoffperoxid sowie die Alkalimetall- und die Ammoniumsalze der Peroxodischwefelsäure, insbesondere Natrium- und Kaliumperoxodisulfat. Die genannten Initiatoren können sowohl einzeln als auch in Mischung verwendet werden. Sie werden vorzugsweise in einer Menge von 0,05 bis 3,0 Gew.-%, bezogen auf das Gesamtgewicht der Monomere der jeweiligen Stufe, eingesetzt.

In einer weiteren bevorzugten Ausführungsform wird die Polymerisation in den Schritten b) bis d) unter Verwendung eines Peroxodisulfats, vorzugsweise unter Verwendung von Ammonium- und/oder Alkaliperoxodisulfat, initiiert.

Als Polymerisationsinititiator können z. B. 0,01 bis 0,5 Gew.-% an Alkali- oder Ammoniumperoxodisulfat, bezogen auf die Wasserphase, eingesetzt werden, wobei die Polymerisation bei Temperaturen von 20 bis 100°C ausgelöst wird. Bevorzugt arbeitet man mit Redoxsystemen, beispielsweise aus 0,01 bis 0,05 Gew.-% organischen Hydroperoxiden und 0,05 bis 0,15 Gew.-% Rongalit® bei Temperaturen von 20 bis 80°C. Bei der Polymerisation der Hartphase wird in der Regel eine geeignete Menge eines Kettenübertragungsmittels, z. B. eines Mercaptans, mitverwendet, um das Molekulargewicht des Hartphasenpolymerisats an das der Formmasse anzugleichen, die mit dem dreiphasigen Emulsionspolymerisat modifiziert werden soll.

Die Stabilisierung des Ansatzes kann mittels Emulgatoren und/oder Schutzkolloiden erfolgen. Bevorzugt wird die Stabilisierung durch Emulgatoren, um eine niedrige Dispersionsviskosität zu erhalten. Die Gesamtmenge an Emulgator beträgt vorzugsweise 0,1 bis 5 Gew.-%, insbesondere 0,5 bis 3 Gew.-%, bezogen auf das Gesamtgewicht der Monomere A) bis J). Besonders geeignete Emulgatoren sind anionische und/oder nichtionische Emulgatoren oder deren Mischungen, insbesondere:

- Alkylsulfate, vorzugsweise solche mit 8 bis 18 Kohlenstoffatomen im Alkylrest, Alkyl- und Alkylarylethersulfate mit 8 bis 18 Kohlenstoffatomen im Alkylrest und 1 bis 50 Ethylenoxideinheiten;

- Sulfonate, vorzugsweise Alkylsulfonate mit 8 bis 18 Kohlenstoffatomen im Alkylrest, Alkylarylsulfonate mit 8 bis 18 Kohlenstoffatomen im Alkylrest, Ester und Halbester der Sulfobernsteinsäure mit einwertigen Alkoholen oder Alkylphenolen mit 4 bis 15 Kohlenstoffatomen im Alkylrest; gegebenenfalls können diese Alkohole oder Alkylphenole auch mit 1 bis 40 Ethylenoxideinheiten ethoxyliert sein;

- Phosphorsäureteilester und deren Alkali- und Ammoniumsalze, vorzugsweise Alkyl- und Alkylarylphosphate mit 8 bis 20 Kohlenstoffatomen im Alkyl- bzw. Alkylarylrest und 1 bis 5 Ethylenoxideinheiten;

- Alkylpolyglykolether, vorzugsweise mit 8 bis 20 Kohlenstoffatomen im Alkylrest und 8 bis 40 Ethylenoxideinheiten;

- Alkylarylpolyglykolether, vorzugsweise mit 8 bis 20 Kohlenstoffatomen im Alkyl- bzw. Alkylarylrest und 8 bis 40 Ethylenoxideinheiten;

- Ethylenoxid/Propylenoxid-Copolymere, vorzugsweise Blockcopolymere, günstigerweise mit 8 bis 40 Ethylenoxid- bzw. Propylenoxideinheiten.

In dem Verfahren zum Erhalten von I. können anionische und/oder nichtionische Emulgatoren einsetzt werden.

Die Emulsionspolymerisation wird in einer Ausführungsform in Gegenwart von anionischen Emulgatoren durchgeführt, die aus der Gruppe ausgewählt sind, bestehend aus Paraffinsulfonaten, Alkylsulfosuccinaten und alkoxylierte und sulfierte Paraffinen.

Bevorzugt werden Gemische aus anionischem Emulgator und nichtionischen Emulgator eingesetzt. Dabei haben sich Gemische aus einem Ester oder Halbester der Sulfobernsteinsäure mit einwertigen Alkoholen oder Alkylphenolen mit 4 bis 15 Kohlenstoffatomen im Alkylrest als anionischem Emulgator und einem Alkylpolyglykolether, bevorzugt mit 8 bis 20 Kohlenstoffatomen im Alkylrest und 8 bis 40 Ethylenoxideinheiten, als nichtionischem Emulgator in einem Gewichtsverhältnis von 8 : 1 bis 1 : 8 ganz besonders bewährt.

Gegebenenfalls können die Emulgatoren auch in Mischung mit Schutzkolloiden eingesetzt werden. Geeignete Schutzkolloide umfassen u. a. teilverseifte Polyvinylacetate, Polyvinylpyrrolidone, Carboxymethyl-, Methyl-, Hydroxyethyl-, Hydroxypropyl-Cellulose, Stärken, Proteine, Poly(meth)acrylsäure, Poly(meth)acrylamid, Polyvinylsulfonsäuren, Melaminformaldehydsulfonate, Naphthalinformaldehydsulfonate, Styrol-Maleinsäure- und Vinylethermaleinsäure-Copolymere. Falls Schutzkolloide eingesetzt werden, erfolgt dies vorzugsweise in einer Menge von 0,01 bis 1,0 Gew.-%, bezogen auf die Gesamtmenge der Monomere A) bis J). Die Schutzkolloide können vor dem Start der Polymerisation vorgelegt oder zudosiert werden.

In einer bevorzugten Ausführungsform legt man in dem Verfahren zum Erhalten von I. eine wässrige Emulsion vor, welche einen Alkylalkohol mit 12 bis 20 Kohlenstoffatomen im Alkylrest enthält.

Der Initiator kann vorgelegt oder zudosiert werden. Weiterhin ist es auch möglich, einen Teil des Initiators vorzulegen und den Rest zudosieren.

Bevorzugt wird die Polymerisation durch Erhitzen des Ansatzes auf die Polymerisationstemperatur und Zudosierung des Initiators, vorzugsweise in wässriger Lösung, gestartet. Die Dosierungen von Emulgator und Monomeren können separat durchgeführt werden oder als Gemisch. Bei der Zudosierung von Gemischen aus Emulgator und Monomer wird so vorgegangen, dass Emulgator und Monomer in einem dem Polymerisationsreaktor vorgeschalteten Mischer vorgemischt werden. Bevorzugt wird der Rest an Emulgator und der Rest an Monomer, welche nicht vorgelegt wurden, nach dem Start der Polymerisation getrennt voneinander zudosiert. Vorzugsweise wird mit der Dosierung 15 bis 35 Minuten nach dem Start der Polymerisation begonnen.

Weiterhin ist es für die Zwecke der vorliegenden Erfindung besonders vorteilhaft, dass die Vorlage ein sogenanntes "Saatlatex" enthält, welches vorzugsweise durch Polymerisation von Alkyl(meth)acrylaten erhältlich ist.

Bevorzugt legt man eine wässrige Emulsion a) vor, welche ein Saatlatex enthält. In einer bevorzugten Ausführungsform wird ein Saatlatex vorlegt, welches einen Teilchendurchmesser, gemessen nach dem Coulter-Verfahren, im Bereich von 10,0 bis 40,0 nm aufweist.

Diese kleinen Radien können nach einer definierten Aufpolymerisation des Saatlatex, bei der eine Schale um den Saatlatex aufgebaut wird und die Radien der so hergestellten Teilchen nach dem Coulter-Verfahren gemessen wurden, berechnet werden. Dieses in der Literatur bekannte Verfahren zur Partikelgrößen-Bestimmung beruht auf der Messung des elektrischen Widerstands, der sich beim Durchtritt von Teilchen durch eine enge Messöffnung in charakteristischer Weise ändert. Weitere Details können beispielsweise Nachr. Chem. Tech. Lab. 43, 553-566 (1995) entnommen werden.

Zu dem Saatlatex werden die Monomerbestandteile des eigentlichen Kerns, d. h. die erste Zusammensetzung,

vorzugsweise unter solchen Bedingungen zugegeben, dass die Bildung neuer Teilchen vermieden wird. Dadurch wird das in der ersten Verfahrensstufe entstehende Polymerisat schalenförmig um das Saatlatex herum gelagert. Analog werden die Monomerbestandteile des ersten Schalenmaterials (zweite Zusammensetzung) unter solchen Bedingungen zu dem Emulsionspolymerisat zugegeben, dass die Bildung neuer Teilchen vermieden wird. Dadurch wird das in der zweiten Stufe entstehende Polymerisat schalenförmig um den bestehenden Kern herum gelagert. Diese Vorgehensweise ist für jede weitere Schale entsprechend zu wiederholen.

Gemäß einer weiteren bevorzugten Ausführungsform der vorliegenden Erfindung werden die erfindungsgemäßen Kern-Schale-Schale-Teilchen durch ein Emulsionspolymerisationsverfahren erhalten werden, bei dem man anstatt des Saatlatex einen langkettigen, aliphatischen Alkohol, vorzugsweise mit 12 bis 20 Kohlenstoffatomen, emulgiert vorlegt. In einer bevorzugten Ausführungsform dieses Verfahrens wird Stearylalkohol als langkettiger, aliphatischer Alkohol verwendet. Die Kern-Schale-Schale-Struktur wird analog zur oben beschriebenen Vorgehensweise durch schrittweise Zugabe und Polymerisation der entsprechenden Monomere unter Vermeidung der Bildung neuer Teilchen erhalten. Weitere Einzelheiten zum Polymerisationsverfahren kann der Fachmann den Patentschriften DE 3343766, DE 3210891, DE 2850105, DE 2742178 und DE 3701579 entnehmen.

Unabhängig von der konkreten Vorgehensweise hat es sich jedoch im Rahmen der vorliegenden Erfindung in dem Verfahren zum Erhalten von I. als ganz besonders günstig erwiesen, die zweite (gemäß c)) und die dritte (gemäß d)) Zusammensetzung nach Maßgabe des Verbrauchs zuzudosieren.

Die Einstellung der Kettenlängen, insbesondere der (Co)Polymerisate der zweiten Schale (dritte Zusammensetzung), kann durch Polymerisation des Monomers bzw. des Monomerengemisches in Gegenwart von Molekulargewichtsreglern erfolgen, wie insbesondere von den dafür bekannten Mercaptanen, wie beispielsweise n-Butylmercaptan, n-Dodecylmercaptan, 2- Mercaptoethanol oder 2-Ethylhexylthioglycolat, Pentaerythrittetrathioglycolat, wobei die Molekulargewichtsregler im allgemeinen in Mengen von 0,05 bis 5 Gew.-% bezogen auf das Monomerengemisch, bevorzugt in Mengen von 0,1 bis 2 Gew.-% und besonders bevorzugt in Mengen von 0,2 bis 1 Gew.-% auf das Monomerengemisch eingesetzt werden (vgl. beispielsweise H. Rauch-Puntigam, Th. Völker, "Acryl- und Methacrylverbindungen", Springer, Heidelberg, 1967; Houben-Weyl, Methoden der organischen Chemie, Bd. XIV/1. Seite 66, Georg Thieme, Heidelberg, 1961 oder Kirk-Othmer, Encyclopedia of Chemical Technology, Vol. 1, Seiten 29611, J. Wiley, New York, 1978). Bevorzugt wird als Molekulargewichtsregler n-Dodecylmercaptan eingesetzt.

Gemäß der Erfindung sind in dem Verfahren zum Erhalten von I. die relativen Anteile aller Substanzen A) bis J) derart gewählt, dass man Kern-Schale-Schale-Teilchen mit einem Gesamtradius, gemessen nach dem Coulter-Verfahren im Bereich von 70,0 bis 125,0 nm, vorzugsweise im Bereich von 85 bis 110,0 nm, bevorzugt im Bereich von 90,0 bis 105,0 nm, erhält.

Für die Zwecke der vorliegenden Erfindung ist es besonders vorteilhaft in dem Verfahren zum Erhalten von I., die relativen Anteile aller Substanzen A) bis J) derart zu wählen, dass das Gesamtgewicht der Substanzen A) bis J), bezogen auf das Gesamtgewicht der wässrigen Dispersion mindestens 30 Gew.-% ist und vorzugsweise zwischen 40 und 50 Gew.-% ist.

Dabei bezeichnet der Begriff "Koagulat" in diesem Zusammenhang wasserunlösliche Bestandteile, welche vorzugsweise durch Filtration der Dispersion zweckmäßigerweise über eine Filtermanschette mit eingespanntem Filtergewebe Nr. 0.90 DIN 4188 abfiltriert werden können. Das erfindungsgemäße Kern-Schale-Schale-Teilchen kann aus der Dispersion beispielsweise durch Sprühtrocknen, Gefrierkoagulation, Ausfällen durch Elektrolytzusatz oder durch mechanische oder thermische Belastung, wie sie gemäß DE 27 50 682 A1 oder US 4 110 843 mittels eines Entgasungsextruders durchführbar ist, gewonnen werden. Das Verfahren der Sprühtrocknung ist am gebräuchlichsten, obwohl die anderen genannten Verfahren den Vorzug haben, dass dabei die wasserlöslichen Polymerisationshilfsstoffe wenigstens teilweise von dem Polymerisat abgetrennt werden.

Die erste Zusammensetzung gemäß b) für die Kern-Schale-Schale-Teilchen, I., umfasst

A) 50,0 bis 99,9 Gew.-Teile, vorzugsweise 71,0 bis 99,9 Gew.-Teile, Alkylmethacrylate mit 1 bis 20, vorzugsweise 1 bis 12, insbesondere 1 bis 8, Kohlenstoffatomen im Alkylrest,

B) 0,0 bis 40,0 Gew.-Teile, vorzugsweise 0,0 bis 29,0 Gew.-Teile, Alkylacrylate mit 1 bis 20, vorzugsweise 1 bis 12, insbesondere 1 bis 8, Kohlenstoffatomen im Alkylrest,

C) 0,1 bis 10,0 Gew.- Teile vernetzende Monomere und

D) 0,0 bis 8,0 Gew.- Teile styrolische Monomere der allgemeinen Formel (I)

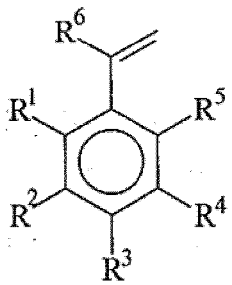

(I).

Die Reste $R^1$ bis $R^5$ bezeichnen jeweils unabhängig voneinander Wasserstoff, ein Halogen, insbesondere Fluor, Chlor oder Brom, eine $C_{1-6}$-Alkylgruppe oder eine $C_{2-6}$-Alkenylgruppe, vorzugsweise Wasserstoff. Der Rest $R^6$ kennzeichnet Wasserstoff oder eine Alkylgruppe mit 1 bis 6 Kohlenstoffatomen, vorzugsweise Wasserstoff. Besonders geeignete Alkylgruppen mit 1 bis 6 Kohlestoffatomen sind Methyl-, Ethyl-, n-Propyl-, iso-Propyl-, n-Butyl-, sec-Butyl-, tert-Butyl-, n-Pentyl-, n-Hexylgruppen sowie Cyclopentyl- und Cyclohexylgruppen.

Somit umfassen styrolische Monomere der allgemeinen Formel (I) Styrol, substituierte Styrole mit einem Alkylsubstituenten in der Seitenkette, wie beispielsweise $\alpha$-Methylstyrol und $\alpha$-Ethylstyrol, substituierte Styrole mit einem Alkylsubstituenten an dem Ring, wie beispielsweise Vinyltoluol und p-Methylstyrol, halogenierte Styrole, wie beispielsweise Monochlorstyrole, Dichlorstyrole, Tribromstyrole und Tetrabromstyrole.

In einer Ausführungsform umfasst die erste Zusammensetzung

A) 75,0 bis 99,9 Gew.-Teile, insbesondere 85,0 bis 99,5 Gew.-Teile, Alkylmethacrylate mit 1 bis 20, vorzugsweise 1 bis 12, insbesondere 1 bis 8, Kohlenstoffatomen im Alkylrest,

B) 0,0 bis 24,9 Gew.-Teile, insbesondere 0,1 bis 14,9 Gew.- Teile, Alkylacrylate mit 1 bis 20, vorzugsweise 1 bis 12, insbesondere 1 bis 8, Kohlenstoffatomen im Alkylrest,

C) 0,1 bis 5,0 Gew.-Teile, insbesondere 0,1 bis 2,0 Gew.-Teile, vernetzende Monomere und

D) 0,0 bis 8,0 Gew.-Teile styrolische Monomere der allgemeinen Formel (I), wobei sich die angegebenen Gewichtsteile zu 100,0 Gew.-Teile addieren.

Erfindungsgemäß sind die Verbindungen A), B), C) und D) voneinander verschieden, insbesondere umfassen die Verbindungen A) und B) keine vernetzenden Monomere C).

Unter den oben erwähnten Alkylmethacrylaten (A) werden Ester der Methacrylsäure verstanden, beispielsweise Methylmethacrylat, Ethylmethacrylat, Propylmethacrylat, Isopropylmethacrylat, n-Butylmethacrylat, sec-Butylmethacrylat, tert-Butylmethacrylat, Pentylmethacrylat, Hexylmethacrylat, Heptylmethacrylat, Octylmethacrylat, 2-Octylmethacrylat, Ethylhexylmethacrylat, Nonylmethacrylat, 2-Methyl-octylmethacrylat, 2-tert-Butylheptylmethacrylat, 3-iso-Propylheptylmethacrylat, Decylmethacrylat, Undecylmethacrylat, 5-Methylundecylmethacrylat, Dodecylmethacrylat, 2-Methyldodecylmethacrylat, Tridecylmethacrylat, 5-Methyltridecylmethacrylat, Tetradecylmethacrylat, Pentadecylmethacrylat, Hexadecylmethacrylat, 2-Methylhexadecylmethacrylat, Heptadecylmethacrylat, 5-iso-Propylheptadecylmethacrylat, 5-Ethyloctadecylmethacrylat, Octadecylmethacrylat, Nonadecylmethacrylat, Eicosylmethacrylat, Cycloalkylmethacrylate, wie beispielsweise Cyclopentylmethacrylat, Cyclohexylmethacrylat, 3-Vinyl-2-butyl-cyclohexylmethacrylat, Cycloheptylmethacrylat, Cyclooctylmethacrylat, Bornylmethacrylat und Isobornylmethacrylat.

Gemäß einer besonders bevorzugten Ausführungsform der vorliegenden Erfindung enthält die erste Zusammensetzung, bezogen auf das Gesamtgewicht der Komponenten A) bis D), mindestens 50 Gew.-%, zweckmäßigerweise mindestens 60 Gew.-%, vorzugsweise mindestens 75 Gew.-%, insbesondere mindestens 85 Gew.-% Methylmethacrylat.

Unter den oben erwähnten Alkylacrylaten (B) werden Ester der Acrylsäure verstanden, beispielsweise Methylacrylat, Ethylacrylat, Propylacrylat, Isopropylacrylat, n-Butylacrylat, sec-Butylacrylat, tert-Butylacrylat, Pentylacrylat, Hexylacrylat, Heptylacrylat, Octylacrylat, 2-Octylacrylat, Ethylhexylacrylat, Nonylacrylat, 2-Methyl-octylacrylat, 2-tert-Butylheptylacrylat, 3-iso-Propylheptylacrylat, Decylacrylat, Undecylacrylat, 5-Methylundecylacrylat, Dodecylacrylat, 2-Methyldodecylacrylat, Tridecylacrylat, 5-Methyltridecylacrylat, Tetradecylacrylat, Pentadecylacrylat, Hexadecylacrylat, 2-ethylhexadecylacrylat, Heptadecylacrylat, 5-iso-Propylheptadecylacrylat, 5-Ethyloctadecylacrylat, Octadecylacrylat, Nonadecylacrylat, Eicosylacrylat, Cycloalkylacrylate, wie beispielsweise Cyclopentylacrylat, Cyclohexylacrylat, 3-Vinyl-2-butyl-cyclohexylacrylat, Cycloheptylacrylat, Cyclooctylacrylat, Bornylacrylat und Isobornylacrylat.

Vernetzende Monomere (C) umfassen alle die Verbindungen, welche in der Lage sind, unter den vorliegenden Polymerisationsbedingungen eine Vernetzung herbeizuführen. Hierzu gehören insbesondere

(a) Difunktionelle (Meth)acrylate, vorzugsweise Verbindungen der allgemeinen Formel:

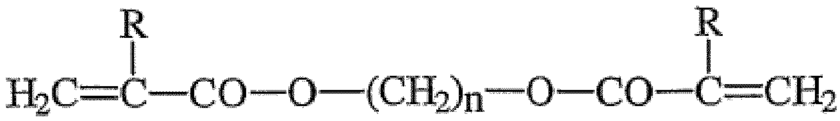

worin R Wasserstoff oder Methyl ist und n eine positive ganze Zahl größer gleich 2, vorzugsweise zwischen 3 und 20 bezeichnet, insbesondere Di(meth)acrylate des Propandiols, Butandiols, Hexandiols, Octandiols, Nonandiols, Decandiols und des Eicosandiols;
Verbindungen der allgemeinen Formel:

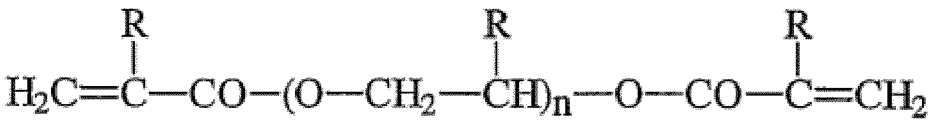

worin R Wasserstoff oder Methyl ist und n eine positive ganze Zahl zwischen 1 und 14 bedeutet, insbesondere Di(meth)acrylate des Ethylenglycols, Diethylenglycols, Triethylenglycols, Tetraethylenglycols, Dodecaethylenglycols, Tetradecaethylenglycols, Propylenglycols, Dipropylglycols und des Tetradecapropylenglycols;
Glycerindi(meth)acrylat, 2,2'-Bis[p-(γ-methacryloxy-ß-hydroxypropoxy)-phenylpropan] oder Bis-GMA, Bisphenol-A-dimethacrylat, Neopentylglycoldi(meth)acrylat, 2,2'-Di(4-methacryloxypolyethoxyphenyl)propan mit 2 bis 10 Ethoxygruppen pro Molekül und 1,2-Bis(3-methacryloxy-2-hydroxypropoxy)butan; und
(b) Tri- oder polyfunktionelle (Meth)acrylate, insbesondere Trimethylolpropantri(meth)acrylate und Pentaerythrittetra(meth)acrylat.
(c) Pfropfvernetzer mit mindestens zwei unterschiedlich reaktiven C-C-Doppelbindungen, insbesondere Allylmethacrylat und Allylacrylat;
(d) aromatische Vernetzer, insbesondere 1,2-Divinylbenzol, 1,3-Divinylbenzol und 1,4-Divinylbenzol.

Vorzugsweise erfolgt die Monomerauswahl bzw. die Auswahl der Gewichtsanteile der Monomere A) bis D) der ersten Zusammensetzung derart, dass das durch die Polymerisation der ersten Zusammensetzung erhältliche Polymer eine Glasübergangstemperatur Tg von mindestens 10°C, vorzugsweise von mindestens 30°C, aufweist. Dabei kann die Glasübergangstemperatur Tg des Polymerisates in bekannter Weise mittels Differential Scanning Calorimetry (DSC) ermittelt werden. Weiterhin kann die Glasübergangstemperatur Tg auch mittels der Fox-Gleichung näherungsweise voraus berechnet werden. Nach Fox T. G., Bull. Am. Physics Soc. 1, 3, Seite 123 (1956) gilt:

$$\frac{1}{Tg} = \frac{x_1}{Tg_1} + \frac{x_2}{Tg_2} + \ldots + \frac{x_n}{Tg_n}$$

wobei $x_n$ für den Massebruch (Gew.-%/100) des Monomeren n steht und $Tg_n$ die Glasübergangstemperatur in Kelvin des Homopolymeren des Monomeren n bezeichnet. Weitere hilfreiche Hinweise kann der Fachmann dem Polymer Handbook 2nd Edition, J. Wiley & Sons, New York (1975) entnehmen, welche Tg-Werte für die geläufigsten Homopolymerisate angibt.

Die zweite Zusammensetzung gemäß c) für die Kern-Schale-Schale-Teilchen, I., umfasst

E) 80,0 bis 100,0 Gew.-Teile (Meth)acrylate,
F) 0,05 bis 5,0 Gew.-Teile vernetzende Monomere und
G) 0,0 bis 25,0 Gew.-Teile styrolische Monomere der allgemeinen Formel (I).

Erfindungsgemäß sind die Verbindungen E), F) und G) voneinander verschieden, insbesondere umfassen die Verbindungen E) keine vernetzenden Monomere F).

In einer besonderen Ausführungsform umfasst die zweite Zusammensetzung

E) 92,0 bis 98,0 Gew.-Teile (Meth)acrylate,
F) 0,1 bis 2,0 Gew.-Teile vernetzende Monomere und
G) 8,0 bis 20,0 Gew.-Teile styrolische Monomere der allgemeinen Formel (I),

wobei sich die angegebenen Gewichtsteile vorzugsweise zu 100,0 Gew.-Teile addieren.

Im Rahmen der vorliegenden Erfindung bezeichnen (Meth)acrylate Acrylate, Methacrylate sowie Mischungen aus beiden. Sie umfassen somit Verbindungen, welche mindestens eine Gruppe der folgenden Formel aufweisen

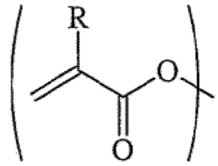

wobei R Wasserstoff oder einen Methylrest kennzeichnet. Zu ihnen gehören insbesondere die vorstehend genannten Alkylacrylate und Alkylmethacrylate. Weiterhin haben sich auch Arylalkylacrylate, insbesondere Benzyl-, Phenylethyl-, Phenylpropyl-, Phenylpentyl- und/oder Phenylhexylacrylat, für die Zwecke der vorliegenden Erfindung als besonders nützlich erwiesen. Sie werden vorzugsweise in einer Menge im Bereich von 0,1 bis 40,0 Gew.-%, bezogen auf das Gesamtgewicht der Komponenten E) und F), eingesetzt.

Die vernetzenden Monomere F) umfassen erfindungsgemäß die vorstehend genannten vernetzenden Monomere C).

Bevorzugt umfasst E) Alkylacrylate mit 3 bis 8 Kohlenstoffatomen im Alkylrest und/oder Alkylmethacrylate mit 7 bis 14 Kohlenstoffatomen im Alkylrest.

Im Rahmen einer ganz besonders bevorzugten Ausführungsform der vorliegenden Erfindung umfasst die zweite Zusammensetzung

E) 90,0 bis 97,9 Gew.-Teile Alkylacrylate mit 3 bis 8 Kohlenstoffatomen im Alkylrest und/oder Alkylmethacrylate mit 7 bis 14 Kohlenstoffatomen im Alkylrest, insbesondere Butylacrylat und/oder Dodecylmethacrylat,

F) 0,1 bis 2,0 Gew.-Teile vernetzende Monomere und

G) 0,0 bis 20,0 Gew.-Teile, vorzugsweise 8,0 bis 20,0 Gew.-Teile styrolische Monomere der allgemeinen Formel (I), wobei sich die Gewichtsteile vorzugsweise zu 100,0 Gew.-Teilen addieren.

Weiterhin erfolgt die Monomerauswahl bzw. die Auswahl der Gewichtsanteile der Monomere E), F) und G) der zweiten Zusammensetzung günstigerweise derart, dass das durch die Polymerisation der zweiten Zusammensetzung erhältliche Polymer eine Glasübergangstemperatur Tg kleiner 30°C, vorzugsweise kleiner 10°C, insbesondere im Bereich von 0 bis -75°C, aufweist. Dabei kann die Glasübergangstemperatur Tg des Polymerisates, wie vorstehend bereits erwähnt mittels Differential Scanning Calorimetry (DSC) ermittelt und/oder mittels der Fox-Gleichung näherungsweise voraus berechnet werden.

Die dritte Zusammensetzung gemäß d) für die Kern-Schale-Schale-Teilchen, I., umfasst

H) 50,0 bis 100,0 Gew.-Teile Alkylmethacrylate mit 1 bis 20, vorzugsweise 1 bis 12, insbesondere 1 bis 8, Kohlenstoffatomen im Alkylrest,

I) 0,0 bis 40,0 Gew.-Teile Alkylacrylate mit 1 bis 20, vorzugsweise 1 bis 12, insbesondere 1 bis 8, Kohlenstoffatomen im Alkylrest und

J) 0,0 bis 10,0 Gew.-Teile styrolische Monomere der allgemeinen Formel (I).

Die dritte Zusammensetzung enthält in einer bevorzugten Ausführungsform

H) 60,0 bis 100,0 Gew.-Teile, bevorzugt 75,0 bis 100,0 Gew.-Teile, insbesondere 85,0 bis 99,5 Gew.- Teile, Alkylmethacrylate mit 1 bis 20, vorzugsweise 1 bis 12, insbesondere 1 bis 8, Kohlenstoffatomen im Alkylrest,

I) 0,0 bis 25,0 Gew.-Teile, insbesondere 0,1 bis 15,0 Gew.- Teile, Alkylacrylate mit 1 bis 20, vorzugsweise 1 bis 12, insbesondere 1 bis 8, Kohlenstoffatomen im Alkylrest,

J) 0,0 bis 10,0 Gew.-Teile, vorzugsweise 0,0 bis 8,0 Gew.-Teile styrolische Monomere der allgemeinen Formel (I),

wobei sich die angegebenen Gewichtsteile vorzugsweise zu 100,0 Gew.-Teile addieren.

Gemäß einer besonders bevorzugten Ausführungsform der vorliegenden Erfindung enthält die dritte Zusammensetzung, bezogen auf das Gesamtgewicht der Komponenten H) bis J), mindestens 50 Gew.-%, zweckmäßigerweise mindestens 60 Gew.-%, vorzugsweise mindestens 75 Gew.-%, insbesondere mindestens 85 Gew.-% Methylmethacrylat.

Weiterhin erfolgt die Monomerauswahl bzw. die Auswahl der Gewichtsanteile der Monomere H), I) und J) der dritten Zusammensetzung günstigerweise derart, dass das durch die Polymerisation der dritten Zusammensetzung erhältliche Polymer eine Glasübergangstemperatur Tg von mindestens 10°C, vorzugsweise von mindestens 30°C, aufweist. Dabei kann die Glasübergangstemperatur Tg des Polymerisates, wie vorstehend bereits erwähnt mittels Differential Scanning Calorimetry (DSC) ermittelt und/oder mittels der Fox-Gleichung näherungsweise voraus berechnet werden.

Das Kern-Schale-Schale-Teilchen I. dient zur Verbesserung der Kerbschlagzähigkeit von harten thermoplastischen Kunststoffen, die mit der Hartphase verträglich sind, vorzugsweise in den erfindungsgemäßen Formmassen, wie Poly(meth)acrylat-Formmassen, insbesondere Polymethylmethacrylat.

Ganz besonders bevorzugt im Rahmen der Erfindung ist eine Formmasse enthaltend jeweils bezogen auf ihr Gesamtgewicht:

I. 10,0 bis 50,0 Gew.-%, vorzugsweise 15,0 bis 45,0 Gew.-%, weiter bevorzugt 20,0 bis 40 Gew.-%, mindestens eines Kern-Schale-Schale-Teilchens hergestellt oder herstellbar nach einem Verfahren bei welchem man

a) Wasser und Emulgator vorlegt,

b) 20,0 bis 45,0 Gew.-Teile einer ersten Zusammensetzung enthaltend:

A) 50,0 bis 99,9 Gew.- Teile, vorzugsweise 71,0 bis 99,9 Gew.- Teile, Alkylmethacrylate mit 1 bis 20 Kohlenstoffatomen im Alkylrest,
B) 0,0 bis 40,0 Gew.-Teile, vorzugsweise 0,0 bis 29,0 Gew.- Teile, Alkylacrylate mit 1 bis 20 Kohlenstoffatomen im Alkylrest,
C)0,1 bis 10,0 Gew.- Teile vernetzende Monomere und
D)0,0 bis 8,0 Gew.- Teile styrolische Monomere der allgemeinen Formel (I)

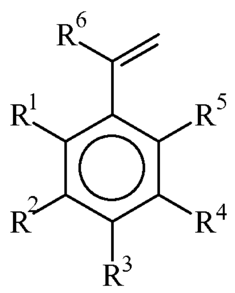

(I)

wobei die Reste $R^1$ bis $R^5$ jeweils unabhängig voneinander Wasserstoff, ein Halogen, eine $C_{1-6}$-Alkylgruppe oder eine $C_{2-6}$-Alkenylgruppe bezeichnen und der Rest $R^6$ Wasserstoff oder eine Alkylgruppe mit 1 bis 6 Kohlenstoffatomen ist,

zugibt und bis zu einem Umsatz von mindestens 85,0 Gew.-%, bezogen auf das Gesamtgewicht der Komponenten A), B), C) und D), polymerisiert,

c) 35,0 bis 55,0 Gew.-Teile einer zweiten Zusammensetzung enthaltend:

E) 80,0 bis 100,0 Gew.- Teile (Meth)acrylate
F) 0,05 bis 5,0 Gew.-Teile vernetzende Monomere und
G)0,0 bis 25,0 Gew.- Teile styrolische Monomere der allgemeinen Formel (I),

zugibt und bis zu einem Umsatz von mindestens 85,0 Gew.-%, bezogen auf das Gesamtgewicht der Komponenten E), F) und G), polymerisiert,

d) 10,0 bis 30,0 Gew.-Teile einer dritten Zusammensetzung enthaltend:

H)50,0 bis 100,0 Gew.- Teile Alkylmethacrylate mit 1 bis 20 Kohlenstoffatomen im Alkylrest,
I) 0,0 bis 40,0 Gew.- Teile Alkylacrylate mit 1 bis 20 Kohlenstoffatomen im Alkylrest und
J) 0,0 bis 10,0 Gew.- Teile styrolische Monomere der allgemeinen Formel (I)

zugibt und bis zu einem Umsatz von mindestens 85,0 Gew.-%, bezogen auf das Gesamtgewicht der Komponenten H), I) und J), polymerisiert,

wobei sich die angegebenen Gewichtsteile der Zusammensetzungen b), c) und d) zu 100,0 Gewichtsteilen addieren, wobei die relativen Anteile aller Substanzen A) bis J) derart gewählt sind, dass man Kern-Schale-Schale-Teilchen mit einem Gesamtradius, gemessen nach dem Coulter-Verfahren, im Bereich von 70,0 bis 125,0 nm, vorzugsweise im Bereich von 85,0 bis 110,0 nm, bevorzugt im Bereich von 90,0 bis 105,0 nm, erhält;

II. 1,0 bis 90,0 Gew.-%, vorzugsweise 1,0 bis 85,0 Gew.-%, weiter bevorzugt 1,0 bis 80,0 Gew.-%, mindestens eines (Meth)acrylpolymers,

III. 0,0 bis 45 Gew.-%, vorzugsweise 0,0 bis 30 Gew.-%, bevorzugt 0,0 bis 10,0 Gew.-%, Styrol-Acrylnitril-Copolymere, und

IV. 0,0 bis 10,0 Gew.-% weiterer Zusatzstoffe

wobei sich die Gewichtsprozente der Komponenten I) bis IV) zu 100,0 Gew.-% addieren und wobei II., oder die Mischung aus II., III. und/oder IV. so gewählt ist, dass sie einen Brechungsindex aufweist, der sich bei einer Messung gemäß ASTM D 542 um nicht mehr als 0,01, vorzugsweise um nicht mehr als 0,002, bevorzugt um nicht mehr als 0,001, Einheiten vom Brechungsindex von I. unterscheidet.

Bevorzugt umfasst das mindestens eine (Meth)acrylpolymer gemäß II., jeweils bezogen auf sein Gesamtgewicht,

a) 52,0 bis 100,0 Gew.-% Alkylmethacrylat-Wiederholungseinheiten mit 1 bis 20, vorzugsweise 1 bis 12, zweckmäßigerweise 1 bis 8, insbesondere 1 bis 4, Kohlenstoffatomen im Alkylrest,
b) 0,0 bis 40,0 Gew.-% Alkylacrylat-Wiederholungseinheiten mit 1 bis 20, vorzugsweise 1 bis 12, zweckmäßigerweise 1 bis 8, insbesondere bis 4, Kohlenstoffatomen im Alkylrest und
c) 0,0 bis 8,0 Gew.-% styrolische Wiederholungseinheiten der allgemeinen Formel (I),

wobei sich die Gewichtsprozente zu 100,0 Gew.-% addieren.

Besonders bevorzugt umfasst das mindestens eine (Meth)acrylpolymer gemäß II., jeweils bezogen auf sein Gesamtgewicht,

a) 60,0 bis 100,0 Gew.-%, besonders bevorzugt 75,0 bis 99,9 Gew.-%, insbesondere 85,0 bis 99,5 Gew.-%, Alkylmethacrylat-Wiederholungseinheiten mit 1 bis 20, vorzugsweise 1 bis 12, zweckmäßigerweise 1 bis 8, insbesondere 1 bis 4, Kohlenstoffatomen im Alkylrest,
b) 0,0 bis 25,0 Gew.-%, besonders bevorzugt 0,1 bis 15,0 Gew.-%, insbesondere 0,5 bis 15,0 Gew.- %, Alkylacrylat-Wiederholungseinheiten mit 1 bis 20, vorzugsweise 1 bis 12, zweckmäßigerweise 1 bis 8, insbesondere bis 4, Kohlenstoffatomen im Alkylrest und
c) 0,0 bis 8,0 Gew.-% styrolische Wiederholungseinheiten der allgemeinen Formel (I),

wobei sich die Gewichtsprozente zu 100,0 Gew.-% addieren.

Gemäß einer besonders bevorzugten Ausführungsform der vorliegenden Erfindung enthält das mindestens eine (Meth)acrylpolymer gemäß II., bezogen auf sein Gesamtgewicht, mindestens 50,0 Gew.-%, zweckmäßigenweise mindestens 60,0 Gew.-%, vorzugsweise mindestens 75,0 Gew.-%, insbesondere mindestens 85,0 Gew.-% Methylmethacrylat-Wiederholungseinheiten.

Weiterhin weist das mindestens eine (Meth)acrylpolymer gemäß II. vorzugsweise ein Zahlenmittel des Molekulargewichtes im Bereich von 1.000 bis 100.000.000 g/mol, vorzugsweise im Bereich von 10.000 bis 1.000.000 g/mol, insbesondere im Bereich von 50.000 bis 500.000 g/mol auf. Dabei kann das Molekulargewicht, beispielsweise mittels Gelpermeationschromatographie unter Eichung auf Polystyrol ermittelt werden.

Ganz besonders bevorzugt umfasst der Bestandteil II. zwei oder mehr unterschiedliche (Meth)acrylpolymere. Insbesondere bevorzugt ist, dass bei dem Vorliegen von mindestens einem weiteren (Meth)acrylpolymer dieses (Meth)acrylpolymer niedermolekular ist. Besonders bevorzugt ist, wenn das niedermolekulare (Meth)acrylpolymer ein Zahlenmittel des Molekulargewichtes im Bereich von 1.000 bis 70.000 g/mol, vorzugsweise im Bereich von 5.000 bis 60.000 g/mol, besitzt. Das niedermolekulare (Meth)acrylpolymer kann einen Anteil von 2 - 20 Gew.-%, vorzugsweise von 5 - 10 Gew.-%, bezogen auf das Gesamtgewicht des (Meth)acrylpolymers II., ausmachen. Mit dem anteiligen Zusetzen eines niedermolekularen (Meth)acrylpolymers wird die Verarbeitbarkeit der im gesamten erzielten Formmasse im Spritzguss oder im Spritzprägen verbessert. Dem Fachmann sind gängige Fließverbesserer in der Form von niedermolekularen (Meth)acrylpolymeren bekannt.

Bevorzugt kann das mindestens eine (Meth)acrylpolymer gemäß II. auch als mindestens ein Copolymer, vorzugsweise als mindestens ein Hoch-Tg-Copolymer, vorliegen. Unter "Hoch-Tg" wird im Sinne der vorliegenden Erfindung

verstanden, dass das Hoch-Tg-Copolymer eine höhere Tg (Glasübergangstemperatur) als Polymethylmethacrylat, vorzugsweise mindestens 110°C, bevorzugt mindestens 115°C, weiter bevorzugt mindestens 120°C, und besonders bevorzugt sogar mindestens 125°C, gemessen gemäß Differentialrasterkalorimetrie unter Stickstoff-Atmosphäre nach ISO 11357. Eine "Hoch-Tg"-Zusammensetzung kann entweder sein a) ein "Hoch-Tg"-Copolymer aus Methylmethacrylat und mindestens einem anderen Monomer, wobei das resultierende Copolymer eine Tg größer als die des Polymethylmethacrylats von ca. 105°C aufweist, oder b) eine Mischung aus einem (Meth)acrylpolymer und mindestens einem mischbaren, halb mischbaren oder kompatiblen Polymer, wobei bei einem mischbaren Polymer die Gesamt-Tg oder bei einem halb mischbaren Polymer mindestens eine der Tg größer als 110°C ist, oder c) Polymethylmethacrylat mit einem höheren Grad an Syndiotaktizität als statistisch polymerisiertes PMMA.

Geeignete Monomere, die in einem Copolymer eine höhere Tg verleihen können, umfassen, sind aber nicht beschränkt auf, Methacrylsäure, Acrylsäure, Itaconsäure, substituierte Styrole, Alpha-Methylstyrol, Maleinsäureanhydrid, Isobornylmethacrylat, Norbornyl-methacrylat, t-Butylmethacrylat, Cyclohexylmethacrylate, substituierte Cyclohexylmethacrylate, Vinylcyclohexan, Phenylmethacrylate, Acrylamide, N-Isopropylacrylamide, Methacrylamide, substituierte Maleimide, Glutarimide und Maleimide.

In einer bevorzugten Ausführungsform enthält die erfindungsgemäße Formmasse bis zu 45 Gew.-% Styrol-Acrylnitril-Copolymere gemäß III., insbesondere 1,0 bis 45 Gew.-%, bezogen auf das Gesamtgewicht der Formmasse. Besonders bevorzugt sind die Styrol-Acrylnitril-Copolymere gemäß III. durch Polymerisation einer Mischung erhalten und/oder erhältlich, die aus

70 bis 92 Gew.-% Styrol
8 bis 30 Gew.-% Acrylnitril und
0 bis 22 Gew.-% weiterer Comonomere, jeweils bezogen auf das Gesamtgewicht der Mischung, besteht.

Die erfindungsgemäßen Formmassen können weitere Zusatzstoffe gemäß IV., insbesondere Polymere, enthalten, um die Eigenschaften in geeigneter Weise zu modifizieren.

Übliche Zusatzstoffe gemäß IV. können in jeder dazu geeigneten Verarbeitungsstufe zugemischt werden. Zu diesen üblichen Zusatzstoffen zählen u. a. Farbstoffe, Pigmente, Füllstoffe, Verstärkungsfasern, Gleitmittel, UV-Schutzmittel usw.

Bezogen auf das Gesamtgewicht der erfindungsgemäßen Formmasse kann diese Formmasse 0,1 bis 10,0 Gew.-%, vorzugsweise 0,5 bis 5,0 Gew.-%, insbesondere 1,0 bis 4,0 Gew.-%, eines weiteren Polymerisates (AP) als Zusatzstoff gemäß IV. enthalten, welches im Vergleich mit dem mindestens einen (Meth)acrylpolymer gemäß II., ein um mindestens 10 %, vorzugsweise mindestens 50 %, insbesondere mindestens 100 %, höheres Gewichtsmittel des Molekulargewichtes aufweist. Dabei kann das Molekulargewicht, beispielsweise mittels Gelpermeationschromatographie unter Eichung auf Polystyrol ermittelt werden.

Erfindungsgemäß besonders geeignete Polymerisate (AP) umfassen, jeweils bezogen auf ihr Gesamtgewicht, vorzugsweise

a) 52,0 bis 100,0 Gew.-%, zweckmäßigerweise 60,0 bis 100,0 Gew.-%, besonders bevorzugt 75,0 bis 99,9 Gew.-%, insbesondere 85,0 bis 99,5 Gew.-%, Alkylmethacrylat-Wiederholungseinheiten mit 1 bis 20, vorzugsweise 1 bis 12, zweckmäßigerweise 1 bis 8, insbesondere 1 bis 4, Kohlenstoffatomen im Alkylrest,
b) 0,0 bis 40,0 Gew.-%, zweckmäßigerweise 0,0 bis 32,0 Gew.-%, besonders bevorzugt 0,1 bis 17,0 Gew.-%, insbesondere 0,5 bis 7,0 Gew.- %, Alkylacrylat-Wiederholungseinheiten mit 1 bis 20, vorzugsweise 1 bis 12, zweckmäßigerweise 1 bis 8, insbesondere 1 bis 4, Kohlenstoffatomen im Alkylrest und
c) 0,0 bis 8,0 Gew.-% styrolische Wiederholungseinheiten der allgemeinen Formel (I),

wobei sich die Gewichtsprozente zu 100,0 Gew.-% addieren.

Gemäß einer besonders bevorzugten Ausführungsform der vorliegenden Erfindung enthält das Polymerisat (AP), bezogen auf sein Gesamtgewicht, mindestens 50,0 Gew.-%, zweckmäßigerweise mindestens 60,0 Gew.-%, vorzugsweise mindestens 75,0 Gew.-%, insbesondere mindestens 85,0 Gew.-% Methylmethacrylat-Wiederholungseinheiten.

Weiterhin weist das Polymerisat (AP) vorzugsweise ein Gewichtsmittel des Molekulargewichtes im Bereich von 10.000 bis 100.000.000 g/mol, vorzugsweise im Bereich von 50.000 bis 5.000.000 g/mol, zweckmäßigerweise im Bereich von 100.000 bis 1.000.000 g/mol, insbesondere im Bereich von 250.000 bis 600.000 g/mol auf. Dabei kann das Molekulargewicht, beispielsweise mittels Gelpermeationschromatographie unter Eichung auf Polystyrol ermittelt werden.

Andere geeignete Polymerisate (AP) sind Polyacrylnitrile, Polystyrole, Polyether, Polyester, Polycarbonate und Polyvinylchloride. Die Polymere können einzeln oder als Mischung eingesetzt werden.

Die erfindungsgemäße Formmasse kann auf verschiedene Weise hergestellt werden. Man kann beispielsweise die Dispersion des Kern-Schale-Schale-Teilchens I. mit einer wässrigen Dispersion der Abmischkomponente vermischen

und die Mischung koagulieren, die Wasserphase abtrennen und das Koagulat zu einer Formmasse verschmelzen. Bei diesem Verfahren lässt sich eine besonders gleichmäßige Vermischung der beiden Massen erzielen. Die Komponenten können auch getrennt hergestellt und isoliert und in Form ihrer Schmelzen oder als Pulver oder Granulate gemischt und in einem Mehrschneckenextruder oder auf einem Walzenstuhl homogenisiert werden.

Bevorzugt weist die erfindungsgemäße Formmasse Folgendes auf:

a. eine Charpy-Schlagzähigkeit nach ISO 179 von mindestens 40,0 kJ/$m^2$, vorzugsweise von mindestens 60,0 kJ/$m^2$, bevorzugt von mindestens 80,0 kJ/$m^2$ bei 23°C und
b. einen Haze nach ASTM D 1003 (1997) von maximal 15,0 % bei 80°C, vorzugsweise von maximal 10,0 % bei 80°C, bevorzugt von maximal 8,0 % bei 80°C, weiter bevorzugt von maximal 5,0 % bei 80°C, hat.

Ein weiterer Gegenstand dieser Anmeldung ist ein Formartikel, der aus der erfindungsgemäßen Formmasse erhältlich ist.

Die erfindungsgemäße Formmasse eignet sich insbesondere zur Herstellung von Formartikeln, zweckmäßigerweise mit einer Wanddicke über 1 mm, wie extrudierten Bahnen von 1 bis 10 mm Dicke, die sich gut stanzen lassen und beispielsweise zur Herstellung bedruckbarer Blenden für Elektrogeräte brauchbar sind, oder zur Herstellung von gespritzten Formkörpern hoher Qualität, z. B. Kraftfahrzeugscheiben. Dünnere Folien von beispielsweise 50 μm Dicke können ebenfalls daraus hergestellt werden.

Bevorzugt weist der erfindungsgemäße Formartikel Folgendes auf:

a. eine Charpy-Schlagzähigkeit nach ISO 179 von mindestens 40,0 kJ/$m^2$, vorzugsweise von mindestens 60,0 kJ/$m^2$, bevorzugt von mindestens 80,0 kJ/$m^2$ bei 23°C und
b. einen Haze nach ASTM D 1003 (1997) von maximal 15,0 % bei 80°C, vorzugsweise von maximal 10,0 % bei 80°C, bevorzugt von maximal 8,0 % bei 80°C, weiter bevorzugt von maximal 5,0 % bei 80°C, hat.

Aufgrund der überraschenderweise gefundenen Eigenschaften einer deutlich reduzierten Haze-Zunahme bei erhöhter Temperatur eignen sich die Produkte insbesondere für Anwendungen, wie Beleuchtung und Verscheibungen. Bei Einsatz der Produkte in Beleuchtungsanwendungen mit Signaleinfärbungen ist keine Farbortverschiebung aufgrund einer Trübungszunahme zu erwarten.

Ein weiteres Einsatzgebiet für das erfindungsgemäß schlagzäh modifizierte PMMA ist für Automobilverscheibung gegeben. Es werden die Anforderungen nach Zähigkeit in Kombination mit optischen Eigenschaften wie hohe Transparenz bei sehr niedriger Haze selbst bei erhöhten Temperaturen erfüllt.

Die Erfindung betrifft daher weiterhin die Verwendung der erfindungsgemäßen Formmasse sowie die Verwendung des erfindungsgemäßen Formartikels.

Insbesondere betrifft sie die Verwendung der erfindungsgemäßen Formmasse zur Herstellung von Verscheibungen, vorzugsweise von Verscheibungen von Kraftfahrzeugen und/oder Schienenfahrzeugen, Gebäuden oder Maschinen. Weiterhin betrifft sie bevorzugt die Verwendung zur Herstellung von Displays für Kommunikationsgeräte, insbesondere PDAs, Mobiltelefone, Handys, vorzugsweise Smartphones; Tablet-PCs; TV-Geräte; Küchengeräte und andere elektronische Geräte. Alternativ betrifft sie die Verwendung zur Herstellung von Leuchtenabdeckungen, vorzugsweise für Raumbeleuchtungen oder Automobilbeleuchtungseinrichtungen.

Insbesondere betrifft sie weiterhin die Verwendung des erfindungsgemäßen Formartikels als Verscheibungen, vorzugsweise als Verscheibungen von Kraftfahrzeugen und/oder Schienenfahrzeugen, Gebäuden oder Maschinen. Weiterhin betrifft sie bevorzugt die Verwendung als Displays für Kommunikationsgeräte, insbesondere PDAs, Mobiltelefone, Handys, vorzugsweise Smartphones; Tablet-PCs; TV-Geräte; Küchengeräte und andere elektronische Geräte. Alternativ betrifft sie die Verwendung als Leuchtenabdeckungen, vorzugsweise für Raumbeleuchtungen oder Automobilbeleuchtungseinrichtungen.

Die nachfolgenden Beispiele sollen die Erfindung näher erläutern.

**Beispiele**

Kern-Schale-Schale-Teilchen I.

Beispiel 1

Herstellung des Saatlatex

Ein Saatlatex wurde mittels Emulsionspolymerisation einer Monomerzusammensetzung enthaltend 98 Gew.-% Ethylacrylat und 2 Gew.-% Allylmethacrylat hergestellt. Diese im Durchmesser ca. 20 nm großen Partikel lagen zu

ca. 10 Gew.-% in Wasser vor.

Herstellung der Kern-Schale-Schale-Teilchen

Alle im Folgenden beschriebenen Kern-Schale-Schale-Teilchen wurden mittels Emulsionspolymerisation gemäß der nachfolgenden Herstellungsvorschrift A (erfindungsgemäße Beispiele B1, B2, B3, B4 sowie B5) bzw. der nachfolgenden Herstellungsvorschrift B (Vergleichsbeispiel VB1) hergestellt. Dabei wurden die in Tabelle 1 angegebenen Emulsionen (i) bis (iii) eingesetzt.

Beispiele B1, B2, B3, B4 und B5

Herstellung der Kern-Schale-Schale-Teilchen durch Herstellungsverfahren A Bei 83°C (Kessel-Innentemperatur) wurden unter Rühren 1,711 kg Wasser in einem Polymerisationskessel vorgelegt. Es erfolgte eine Zugabe von 1,37 g Natriumcarbonat und Saatlatex. Anschließend wurde die Emulsion (i) über 1 h zudosiert. 10 min nach Zulaufende der Emulsion (i) wurde die Emulsion (ii) über einen Zeitraum von ca. 2 h zudosiert. Anschließend wurde ca. 60 min nach Zulaufende der Emulsion (ii) Emulsion (iii) über einen Zeitraum von ca. 1 h zudosiert. 30 min nach Zulaufende der Emulsion (iii) wurde auf 30°C abgekühlt.

Zur Separation der Kern-Schale-Schale-Teilchen wurde die Dispersion über 2 Tage bei -20°C eingefroren, danach wieder aufgetaut und die koagulierte Dispersion über ein Filtergewebe abgetrennt. Die Trocknung des Feststoffs erfolgte bei 50°C im Trockenschrank (Dauer: ca. 3 Tage). Die Teilchengröße der Kern-Schale-Schale-Teilchen (s. Tabelle 2) wurde mit Hilfe eines Nano-Sizer© N5 von Coulter bestimmt, wobei die Partikel in Dispersion vermessen wurden.

Vergleichsbeispiel VB1

Herstellung der Kern-Schale-Schale-Teilchen durch Herstellungsverfahren B

Bei 52°C (Kessel-Innentemperatur) wurden unter Rühren 1,711 kg Wasser in einem Polymerisationskessel vorgelegt und 0,10 g Essigsäure, 0,0034 g Eisen(II)sulfat, 0,69 g Natriumdisulfit sowie der Saatlatex zugegeben. Anschließend wurde die Emulsion (i) über 1,5 h zudosiert. 10 min nach Zulaufende der Emulsion (i) wurde 7,46 g Natriumdisulfit gelöst in 100 g Wasser zugegeben und die Emulsion (ii) über einen Zeitraum von ca. 2,5 h zudosiert. Anschließend wurden ca. 30 min nach Zulaufende der Emulsion (ii) 0,62 g Natriumdisulfit gelöst in 50 g Wasser zugegeben und die Emulsion (iii) wurde über einen Zeitraum von ca. 1,5 h zudosiert. 30 min nach Zulaufende der Emulsion (iii) wurde auf 30°C abgekühlt.

Zur Separation der Kern-Schale-Schale-Teilchen wurde die Dispersion über 2 Tage bei -20°C eingefroren, danach wieder aufgetaut und die koagulierte Dispersion über ein Filtergewebe abgetrennt. Die Trocknung des Feststoffs erfolgte bei 50°C im Trockenschrank (Dauer: ca. 3 Tage). Die Teilchengröße der Kern-Schale-Schale-Teilchen (s. Tabelle 2) wurde mit Hilfe eines Nano-Sizer© N5 von Coulter bestimmt, wobei die Partikel in Dispersion vermessen wurden.

Tabelle 1: Zusammenfassung der einzelnen Emulsionen (alle Angaben in [g])

| | **B1** | **B2** | **B3** | **B4** | **B5** | **VB1** |
|---|---|---|---|---|---|---|
| Saatlatex | 93,00 | 58,00 | 28,00 | 20,00 | 16,00 | 5,00 |
| **Emulsion (i)** | | | | | | |
| Wasser | 878,70 | 878,70 | 878,70 | 878,70 | 878,70 | 732,69 |
| Natriumpersulfat | 0,70 | 0,70 | 0,70 | 0,70 | 0,70 | 0,51 |
| Aerosol OT75 | 5,60 | 5,60 | 5,60 | 5,60 | 5,60 | 4,67 |
| Methylmethacrylat | 1071,62 | 1071,62 | 1071,62 | 1071,62 | 1071,62 | 703,47 |
| Ethylacrylat | 44,74 | 44,74 | 44,74 | 44,74 | 44,74 | 29,40 |
| Allylmethacrylat | 2,24 | 2,24 | 2,24 | 2,24 | 2,24 | 2,21 |
| **Emulsion (ii)** | | | | | | |
| Wasser | 606,90 | 606,90 | 606,90 | 606,90 | 606,90 | 628,65 |
| Natriumpersulfat | 1,58 | 1,58 | 1,58 | 1,58 | 1,58 | 1,44 |
| Aerosol OT75 | 7,20 | 7,20 | 7,20 | 7,20 | 7,20 | 7,46 |
| Butylacrylat | 1160,63 | 1160,63 | 1160,63 | 1160,63 | 1160,63 | 1219,72 |
| Styrol | 256,00 | 256,00 | 256,00 | 256,00 | 256,00 | 262,87 |

(fortgesetzt)

| | | | | | | |
|---|---|---|---|---|---|---|
| **Emulsion (ii)**<br>Allylmethacrylat | 21,57 | 21,57 | 21,57 | 21,57 | 21,57 | 19,53 |
| **Emulsion (iii)** | | | | | | |
| Wasser | 404,30 | 404,30 | 404,30 | 404,30 | 404,30 | 381,56 |
| Natriumpersulfat | 0,70 | 0,70 | 0,70 | 0,70 | 0,70 | 0,44 |
| Aerosol OT75 | 1,08 | 1,08 | 1,08 | 1,08 | 1,08 | 1,34 |
| Methylmethacrylat | 614,27 | 614,27 | 614,27 | 614,27 | 614,27 | 920,45 |
| Ethylacrylat | 24,93 | 24,93 | 24,93 | 24,93 | 24,93 | 38,35 |

Abmischung der Formmassen

Beispiele 2, 3, 4, 5, 7, 8, 9 und 10 sowie Vergleichsbeispiel 6

Es wurde eine niedermolekulare Formmasse (NF) mit einem $M_w$ von ca. 50 000 g/mol bestehend aus 85 Gew.-% Methylmethacrylat- und 15 Gew.-% Methylacrylat-Einheiten hergestellt.

Ferner wurde die Formmasse Altuglas® HT 121 (Fa. Arkema, Frankreich) bereit gestellt, die sich durch eine hohe Wärmeformbeständigkeit auszeichnet (Hoch-TG-Formmasse enthaltend Methacrylsäure).

Eine Formmasse auf Polymethylmethacrylat-Basis, PLEXIGLAS® 7N (Fa. Evonik Industries AG, Darmstadt) ggf. gemischt mit einem Anteil an der obigen niedermolekularen Formmasse (NF) und/oder mit einem Anteil an Altuglas® HT 121 oder eine Formmasse auf Polymethylmethacrylat-Basis, PLEXIGLAS® 8H (Fa. Evonik Industries AG, Darmstadt), wurde mit den jeweiligen Kern-Schale-Schale-Teilchen B1-B5 bzw. VB1 mittels Extruder abgemischt, wobei die eingesetzte Formmasse bzw. abgemischte Formmasse jeweils dem (Meth)acrylpolymeren II. entsprach. Die Zusammensetzungen der einzelnen Beispiele und des Vergleichsbeispieles sind in Tabelle 2 dokumentiert.

In einem 10 l Mischbehälter wurden 4 kg des jeweiligen (Meth)acrylpolymeren II. und 2450 g des jeweiligen Kern-Schale-Schale-Teilchen I. (38 Gew.-%) eingewogen. Die Mischung wurde 3 Minuten mittels eines Taumelmischers intensiv gemischt und dann in den Trichter eines Einschneckenextruder Stork mit 35 mm Schneckendurchmesser gegeben. Bei einer Schmelzetemperatur von 235°C wurden die Komponenten gemischt, aus der Extruderdüse Stränge abgezogen, im Wasserbad gekühlt und zu Gleichkorngranulat granuliert.

Vom erhaltenen Granulat wurden auf einer Spritzgießmaschine Battenfeld BA 500 Probekörper gemäß ISO 294 spritzgegossen. Zur Bestimmung der Schlagzähigkeit wurden Probekörper der Abmessung 80x10x4 mm bei 250°C spritzgegossen. Zur Bestimmung optischer Eigenschaften wurden Plättchen 65x40x3mm bei 250°C Schmelzetemperatur spritzgegossen.

Prüfung der Formmassen

Aus den abgemischten Formmassen wurden Prüfkörper hergestellt. Die Formmassen bzw. die entsprechenden Prüfkörper wurden gemäß den folgenden Messmethoden geprüft:

- Vicat-Erweichungstemperatur (B50, 16 h/80°C): DIN ISO 306 (Aug. 1994)
- Charpy-Schlagzähigkeit: ISO 179 (1993)
- E-Modul: ISO 527-2
- Transmission (D 65/10°): DIN 5033/5036
- Haze (Hazemeter BYK Gardner Hazegard-plus): ASTM D 1003 (1997)
- MVR (230°C, 3,8Kg): ISO 1133

Die Ergebnisse der Prüfungen sind in Tabelle 2 zu sehen. Man erkennt eindeutig die Vorteile der erfindungsgemäßen Abmischungen gegenüber den herkömmlich schlagzähmodifizierten Formmassen des Vergleichsbeispiels 6. Die erfindungsgemäßen Abmischungen weisen auch bei höherer Temperatur (80°C) niedrige Haze-Werte von weniger

als 5%, bestimmt nach ASTM D1003, auf. Dabei bieten die erfindungsgemäßen Formmassen jedoch ein Zähigkeitsniveau und eine Schlagzähigkeit wie die bekannten Formmassen (Vergleichsbeispiel 6), ohne die anderen wichtigen Eigenschaften der Formmassen, insbesondere die Vicat-Erweichungstemperatur und den E-Modul zu verschlechtern. Teilweise sind die diesbezüglich erhaltenen Werte sogar gegenüber den bekannten Formmassen verbessert (vgl. Beispiel 10).

Tabelle 2: Prüfergebnisse der schlagzähmodifizierten Formmassen (bei einer Abmischung mit 38 Gew.-% Kern-Schale-Schale-Teilchen I. in (Meth)acrylpolymer II.)

| | Beispiel 2 | Beispiel 3 | Beispiel 4 | Beispiel 5 | Vergleichsbeispiel 6 |
|---|---|---|---|---|---|
| Kern-Schale-Schale-Teilchen | B1 | B2 | B3 | B4 | VB1 |
| Formmasse | 7N | 7N | 7N | 8H | 7N |
| Teilchenradius [nm] | 72 | 88 | 101 | 116 | 165 |
| Vicat [°C] | 97,5 | 97,8 | 97,9 | 99,6 | 99,6 |
| Charpy-SZ @ 23°C [kJ/m$^2$] | 49,4 | 71,3 | 91,5 | 96,7 | 95,9 |
| Lichttransmission | 91,3 | 91,4 | 91,5 | 91,3 | 91,0 |
| Haze @ 23°C [%] | 0,71 | 0,56 | 0,68 | 1,3 | 1,9 |
| Haze @ 60°C [%] | 1,35 | 1,22 | 1,57 | 5,4 | 5,2 |
| Haze @ 80°C [%] | 2,04 | 2,34 | 3,71 | 11,8 | 22,4 |
| E-Modul [MPa] | 2043 | 1946 | 1943 | 2220 | 1828 |
| MVR [cm$^3$/10min] | 1,00 | 1,16 | 1,59 | 0,5 | 1,83 |
| | Beispiel 7 | Beispiel 8 | Beispiel 9 | Beispiel 10 | |
| Kern-Schale-Schale-Teilchen | B3 | B3 | B3 | B5 | |
| Formmasse | 7N + 10 Gew.-% NF | Altuglas® HT 121 | Altuglas® HT 121 + 10 Gew.-% NF | 7N | |
| Teilchenradius [nm] | 101 | 101 | 101 | 122 | |
| Vicat [°C] | 95,9 | 106,7 | 105,6 | 96,1 | |
| Charpy-SZ @ 23°C [kJ/m$^2$] | 92,3 | 89,4 | 62,8 | 107,9 | |
| Lichttransmission | 91,0 | 90,8 | 89,9 | 91,5 | |
| Haze @ 23°C [%] | 1,1 | 1,4 | 1,4 | 0,9 | |
| Haze @ 60°C [%] | 2,1 | 4,5 | 4,8 | 5,6 | |
| Haze @ 80°C [%] | 4,6 | 8,4 | 8,5 | 9,7 | |
| E-Modul [MPa] | 1923 | 2191 | 2097 | 1875 | |
| MVR [cm$^3$/10min] | 2,35 | 0,53 | 0,88 | 1,68 | |

Figur 1 zeigt die Prüfergebnisse für die Charpy-Schlagzähigkeit und die Haze-Werte bei 23°C sowie bei 80°C der schlagzähmodifizierten Formmassen (bei einer Abmischung mit 38 Gew.% Kern-Schale-Schale-Teilchen I. in der jeweiligen Formmasse) der Beispiele 2, 3, 4 und 10 sowie Vergleichsbeispiel 6.

In der Figur 1 wie auch in Tabelle 2 ist die deutlich reduzierte Haze-Zunahme der erfindungsgemäßen Formmassen bei erhöhter Temperatur zu erkennen, weshalb sie sich für Anwendungen wie Beleuchtung und Verscheibungen eignen. Insbesondere die Anforderungen nach Zähigkeit in Kombination mit optischen Eigenschaften wie hohe Transparenz bei sehr niedrigem Haze selbst bei erhöhten Temperaturen, die an Automobilverscheibungen gestellt werden, werden erfüllt. In Beispiel 7 wird der Effekt des Zusatzes des niedermolekularen (Meth)acrylpolymers bzw. des Fließverbesserers durch die deutliche Beeinflussung des MVR gegenüber dem Vergleichsbeispiel 6 und den weiteren

Beispielen aufgezeigt.

**Patentansprüche**

1. Formmasse enthaltend jeweils bezogen auf ihr Gesamtgewicht:

I. 10,0 bis 50,0 Gew.-%, vorzugsweise 15,0 bis 45,0 Gew.-%, weiter bevorzugt 20,0 bis 40 Gew.-%, mindestens eines Kern-Schale-Schale-Teilchens hergestellt oder herstellbar nach einem Verfahren bei welchem man

a) Wasser und Emulgator vorlegt,
b) 20,0 bis 45,0 Gew.-Teile einer ersten Zusammensetzung enthaltend:

A) 50,0 bis 99,9 Gew.- Teile, vorzugsweise 71,0 bis 99,9 Gew.- Teile, Alkylmethacrylate mit 1 bis 20 Kohlenstoffatomen im Alkylrest,
B) 0,0 bis 40,0 Gew.-Teile, vorzugsweise 0,0 bis 29,0 Gew.- Teile, Alkylacrylate mit 1 bis 20 Kohlenstoffatomen im Alkylrest,
C)0,1 bis 10,0 Gew.- Teile vernetzende Monomere und
D)0,0 bis 8,0 Gew.- Teile styrolische Monomere der allgemeinen Formel (I)

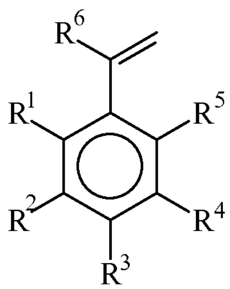

(I)

wobei die Reste $R^1$ bis $R^5$ jeweils unabhängig voneinander Wasserstoff, ein Halogen, eine $C_{1-6}$-Alkylgruppe oder eine $C_{2-6}$-Alkenylgruppe bezeichnen und der Rest $R^6$ Wasserstoff oder eine Alkylgruppe mit 1 bis 6 Kohlenstoffatomen ist,
zugibt und bis zu einem Umsatz von mindestens 85,0 Gew.-%, bezogen auf das Gesamtgewicht der Komponenten A), B), C) und D), polymerisiert,

c) 35,0 bis 55,0 Gew.-Teile einer zweiten Zusammensetzung enthaltend:

E) 80,0 bis 100,0 Gew.- Teile (Meth)acrylate
F) 0,05 bis 5,0 Gew.-Teile vernetzende Monomere und
G)0,0 bis 25,0 Gew.- Teile styrolische Monomere der allgemeinen Formel (I),

zugibt und bis zu einem Umsatz von mindestens 85,0 Gew.-%, bezogen auf das Gesamtgewicht der Komponenten E), F) und G), polymerisiert,
d) 10,0 bis 30,0 Gew.-Teile einer dritten Zusammensetzung enthaltend:

H)50,0 bis 100,0 Gew.- Teile Alkylmethacrylate mit 1 bis 20 Kohlenstoffatomen im Alkylrest,
I) 0,0 bis 40,0 Gew.- Teile Alkylacrylate mit 1 bis 20 Kohlenstoffatomen im Alkylrest und
J) 0,0 bis 10,0 Gew.- Teile styrolische Monomere der allgemeinen Formel (I)

zugibt und bis zu einem Umsatz von mindestens 85,0 Gew.-%, bezogen auf das Gesamtgewicht der Komponenten H), I) und J), polymerisiert,
wobei sich die angegebenen Gewichtsteile der Zusammensetzungen b), c) und d) zu 100,0 Gewichtsteilen addieren, wobei die relativen Anteile aller Substanzen A) bis J) derart gewählt sind, dass man Kern-Schale-Schale-Teilchen mit einem Gesamtradius, gemessen nach dem Coulter-Verfahren, im Bereich von 70,0 bis 125,0 nm, vorzugsweise im Bereich von 85,0 bis 110,0 nm, bevorzugt im Bereich von 90,0 bis 105,0 nm, erhält;
II. 1,0 bis 90,0 Gew.-%, vorzugsweise 1,0 bis 85,0 Gew.-%, weiter bevorzugt 1,0 bis 80,0 Gew.-%, mindestens

eines (Meth)acrylpolymers,
III. 0,0 bis 45 Gew.-%, vorzugsweise 0,0 bis 30 Gew.-%, bevorzugt 0,0 bis 10,0 Gew.-%, Styrol-Acrylnitril-Copolymere, und
IV. 0,0 bis 10,0 Gew.-% weiterer Zusatzstoffe

wobei sich die Gewichtsprozente der Komponenten I) bis IV) zu 100,0 Gew.-% addieren und
wobei II., oder die Mischung aus II., III. und/oder IV. so gewählt ist, dass sie einen Brechungsindex aufweist, der sich bei einer Messung gemäß ASTM D 542 um nicht mehr als 0,01, vorzugsweise um nicht mehr als 0,002, bevorzugt um nicht mehr als 0,001, Einheiten vom Brechungsindex von I. unterscheidet.

2. Formmasse nach Anspruch 1, **dadurch gekennzeichnet, dass** in dem Verfahren gemäß I. jede Polymerisation bei einer Temperatur im Bereich von größer 60 bis kleiner 90 °C durchgeführt wird oder jede Polymerisation durch ein Redox-Initiator-System initiiert wird.

3. Formmasse gemäß mindestens einem der vorherigen Ansprüche **dadurch gekennzeichnet, dass** man in dem Verfahren zum Erhalten von I. die Polymerisation in den Schritten b) bis d) unter Verwendung eines Peroxodisulfates, vorzugsweise unter Verwendung von Ammonium- und/oder Alkaliperoxodisulfat, initiiert.

4. Formmasse gemäß mindestens einem der vorherigen Ansprüche **dadurch gekennzeichnet, dass** die Formmasse

a. eine Charpy-Schlagzähigkeit nach ISO 179 von mindestens 40,0 $kJ/m^2$, vorzugweise von mindestens 60,0 $kJ/m^2$, bevorzugt von mindestens 80,0 $kJ/m^2$, bei 23 °C und
b. einen Haze nach ASTM D 1003 (1997) von maximal 15,0 % bei 80 °C, vorzugweise von maximal 10,0 % bei 80 °C, bevorzugt von maximal 8 % bei 80 °C, weiter bevorzugt von maximal 5 % bei 80 °C, hat.

5. Formmasse gemäß mindestens einem der vorherigen Ansprüche, **dadurch gekennzeichnet, dass** in dem Verfahren zum Erhalten von I. 90,00 bis 99,99 Gew.-Teile Wasser und 0,01 bis 10,00 Gew.-Teile Emulgator vorlegt werden, wobei sich die angegebenen Gewichtsteile zu 100,00 Gewichtsteilen addieren.

6. Formmasse gemäß mindestens einem der vorherigen Ansprüche, **dadurch gekennzeichnet, dass** man in dem Verfahren zum Erhalten von I. anionische oder nichtionische Emulgatoren einsetzt.

7. Formmasse gemäß mindestens einem der vorherigen Ansprüche, **dadurch gekennzeichnet, dass** man in dem Verfahren zum Erhalten von I. eine wässrige Emulsion vorlegt, welche ein Saatlatex enthält.

8. Formmasse gemäß Anspruch 7, wobei man ein Saatlatex vorlegt, welches einen Teilchendurchmesser, gemessen nach dem Coulter-Verfahren, im Bereich von 10,0 bis 40,0 nm aufweist.

9. Formmasse gemäß mindestens einem der Ansprüche 1 bis 6, **dadurch gekennzeichnet, dass** man in dem Verfahren zum Erhalten von I. eine wässrige Emulsion vorlegt, welche einen Alkylalkohol mit 12 bis 20 Kohlenstoffatomen im Alkylrest enthält.

10. Formmasse gemäß mindestens einem der vorherigen Ansprüche, **dadurch gekennzeichnet, dass** man in dem Verfahren zum Erhalten von I. die zweite und die dritte Monomermischung nach Maßgabe des Verbrauchs zudosiert.

11. Formmasse gemäß mindestens einem der vorherigen Ansprüche, **dadurch gekennzeichnet, dass** das mindestens eine (Meth)acrylpolymer gemäß II., jeweils bezogen auf sein Gesamtgewicht,

a) 52,0 bis 100,0 Gew.-% Alkylmethacrylat-Wiederholungseinheiten mit 1 bis 20 Kohlenstoffatomen im Alkylrest,
b) 0,0 bis 40,0 Gew.-% Alkylacrylat-Wiederholungseinheiten mit 1 bis 20 Kohlenstoffatomen im Alkylrest und
c) 0,0 bis 8,0 Gew.-% styrolische Wiederholungseinheiten der allgemeinen Formel (I)

umfasst, wobei sich die Gewichtsprozente zu 100,0 Gew.-% addieren.

12. Formmasse gemäß mindestens einem der vorherigen Ansprüche, **dadurch gekennzeichnet, dass** die Formmasse Styrol-Acrylnitril-Copolymere gemäß III. enthält, wobei die Styrol-Acrylnitril-Copolymere durch Polymerisation einer Mischung erhalten wurden, die aus

70 bis 92 Gew.-% Styrol
8 bis 30 Gew.-% Acrylnitril und
0 bis 22 Gew.-% weiterer Comonomere, jeweils bezogen auf das Gesamtgewicht der Mischung, besteht.

**13.** Formmasse gemäß mindestens einem der vorherigen Ansprüche, **dadurch gekennzeichnet, dass** die Formmasse bezogen auf ihr Gesamtgewicht 0,1 bis 10,0 Gew.-% eines weiteren Polymerisates als Zusatzstoff gemäß IV. enthält, welches im Vergleich mit dem mindestens einen (Meth)acrylpolymer gemäß II. ein um mindestens 10 % höheres Gewichtsmittel des Molekulargewichtes aufweist.

**14.** Formartikel erhältlich aus einer Formmasse gemäß mindestens einem der Ansprüche 1 bis 13.

**15.** Formartikel gemäß Anspruch 14, **dadurch gekennzeichnet, dass** der Formartikel

a. eine Charpy-Schlagzähigkeit nach ISO 179 von mindestens 40,0 $kJ/m^2$, vorzugweise von mindestens 60,0 $kJ/m^2$, bevorzugt von mindestens 80,0 $kJ/m^2$, bei 23 °C und
b. einen Haze nach ASTM D 1003 (1997) von maximal 15,0 % bei 80 °C, vorzugweise von maximal 10,0 % bei 80 °C, bevorzugt von maximal 8 % 47bei 80 °C, weiter bevorzugt von maximal 5 % bei 80 °C, hat.

**16.** Verwendung einer Formmasse gemäß mindestens einem der Ansprüche 1 bis 13 zur Herstellung von Verscheibungen, vorzugsweise von Verscheibungen von Kraftfahrzeugen und/oder Schienenfahrzeugen, Gebäuden oder Maschinen.

**17.** Verwendung eines Formartikels gemäß einem der Ansprüche 14 oder 15 als Verscheibung, vorzugsweise als Verscheibung von Kraftfahrzeugen und/oder Schienenfahrzeugen, Gebäuden oder Maschinen.

**18.** Verwendung einer Formmasse gemäß mindestens einem der Ansprüche 1 bis 13 zur Herstellung von Displays für Kommunikationsgeräte, insbesondere PDAs, Mobiltelefone, Handys, vorzugsweise Smartphones; Tablet-PCs; TV-Geräte; Küchengeräte und andere elektronische Geräte.

**19.** Verwendung eines Formartikels gemäß einem der Ansprüche 14 oder 15 als Display für ein Kommunikationsgerät, insbesondere ein PDA, ein Mobiltelefon, ein Handy, vorzugsweise ein Smartphone; ein TV-Gerät; ein Tablet-PC; ein Küchengerät oder ein anderes elektronisches Gerät.

**20.** Verwendung einer Formmasse gemäß mindestens einem der Ansprüche 1 bis 13 zur Herstellung von Leuchtenabdeckungen, vorzugsweise für Raumbeleuchtungen oder Automobilbeleuchtungseinrichtungen.

**21.** Verwendung eines Formartikels gemäß einem der Ansprüche 14 oder 15 als Leuchtenabdeckung, vorzugsweise für Raumbeleuchtungen oder Automobilbeleuchtungseinrichtungen.

## Claims

**1.** Moulding composition comprising respectively, based on its total weight:

I. from 10.0 to 50.0% by weight, preferably from 15.0 to 45.0% by weight, more preferably from 20.0 to 40% by weight, of at least one core-shell-shell particle produced or amenable to production by a process in which

a) water and emulsifier are used as initial charge,
b) from 20.0 to 45.0 parts by weight of a first composition comprising:

A) from 50.0 to 99.9 parts by weight, preferably from 71.0 to 99.9 parts by weight, of alkyl methacrylates having from 1 to 20 carbon atoms in the alkyl moiety,
B) from 0.0 to 40.0 parts by weight, preferably from 0.0 to 29.0 parts by weight, of alkyl acrylates having from 1 to 20 carbon atoms in the alkyl moiety,
C) from 0.1 to 10.0 parts by weight of crosslinking monomers and
D) from 0.0 to 8.0 parts by weight of styrenic monomers of the general formula (I)

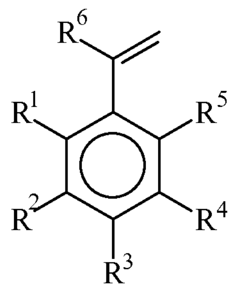

(I)

where the moieties $R^1$ to $R^5$ respectively mutually independently denote hydrogen, a halogen, a $C_{1-6}$-alkyl group or a $C_{2-6}$-alkenyl group and the moiety $R^6$ is hydrogen or an alkyl group having from 1 to 6 carbon atoms,
are added,
and polymerization is carried out until conversion is at least 85.0% by weight, based on the total weight of the components A), B), C) and D),

c) from 35.0 to 55.0 parts by weight of a second composition comprising:

E) from 80.0 to 100.0 parts by weight of (meth)acrylates
F) from 0.05 to 5.0 parts by weight of crosslinking monomers and
G) from 0.0 to 25.0 parts by weight of styrenic monomers of the general formula (I)

are added, and polymerization is carried out until conversion is at least 85.0% by weight, based on the total weight of the components E), F) and G),
d) from 10.0 to 30.0 parts by weight of a third composition comprising:

H) from 50.0 to 100.0 parts by weight of alkyl methacrylates having from 1 to 20 carbon atoms in the alkyl moiety,
I) from 0.0 to 40.0 parts by weight of alkyl acrylates having from 1 to 20 carbon atoms in the alkyl moiety and
J) from 0.0 to 10.0 parts by weight of styrenic monomers of the general formula (I)

are added, and polymerization is carried out until conversion is at least 85.0% by weight, based on the total weight of the components H), I) and J),

where the stated parts by weight of the compositions b), c) and d) give a total of 100.0 parts by weight,
where the relative proportions of all of the substances A) to J) have been selected in such a way as to give core-shell-shell particles with a total radius, measured by the Coulter method, in the range from 70.0 to 125.0 nm, preferably in the range from 85.0 to 110.0 nm, with preference in the range from 90.0 to 105.0 nm;
II. from 1.0 to 90.0% by weight, preferably from 1.0 to 85.0% by weight, more preferably from 1.0 to 80.0% by weight, of at least one (meth) acrylic polymer,
III. from 0.0 to 45% by weight, preferably from 0.0 to 30% by weight, preferably from 0.0 to 10.0% by weight, of styrene-acrylonitrile copolymers, and
IV. from 0.0 to 10.0% by weight of other additives,

where the percentages by weight of components I) to IV) give a total of 100.0% by weight and
where selection of II., or of the mixture of II., III. and/or IV. is such that in a measurement in accordance with ASTM D542 its refractive index differs from the refractive index of I. by no more than 0.01 unit, preferably by no more than 0.002 unit, with preference by no more than 0.001 unit.

2. Moulding composition according to Claim 1, **characterized in that** in the process in accordance with I. each polymerization is carried out at a temperature in the range from above 60 to below 90°C or each polymerization is initiated by a redox initiator system.

3. Moulding composition according to at least one of the preceding claims, **characterized in that** in a process for obtaining I. the polymerization in the steps b) to d) is initiated with use of a peroxodisulphate, preferably with use of

ammonium peroxodisulphate and/or of alkali metal peroxodisulphate.

4. Moulding composition according to at least one of the preceding claims, **characterized in that** the moulding composition

a. has a Charpy impact resistance in accordance with ISO 179 of at least 40.0 kJ/$m^2$, preferably of at least 60.0 kJ/$m^2$, with preference of at least 80.0 kJ/$m^2$, at 23°C and
b. has a haze in accordance with ASTM D1003 (1997) of at most 15.0% at 80°C, preferably of at most 10.0% at 80°C, with preference of at most 8% at 80°C, with more preference of at most 5% at 80°C.

5. Moulding composition according to at least one of the preceding claims, **characterized in that** the process for obtaining I. uses, as initial charge, from 90.00 to 99.99 parts by weight of water and from 0.01 to 10.00 parts by weight of emulsifier, where the stated parts by weight give a total of 100.00 parts by weight.

6. Moulding composition according to at least one of the preceding claims, **characterized in that** the process for obtaining I. uses anionic or non-ionic emulsifiers.

7. Moulding composition according to at least one of the preceding claims, **characterized in that** the process for obtaining I. uses, as initial charge, an aqueous emulsion which comprises a seed latex.

8. Moulding composition according to Claim 7, where a seed latex is used as initial charge and has a particle diameter, measured by the Coulter method, in the range from 10.0 to 40.0 nm.

9. Moulding composition according to at least one of Claims 1 to 6, **characterized in that** the process for obtaining I. uses, as initial charge, an aqueous emulsion which comprises an alkyl alcohol having from 12 to 20 carbon atoms in the alkyl moiety.

10. Moulding composition according to at least one of the preceding claims, **characterized in that**, in the process for obtaining I., the second and the third monomer mixture is metered into the system as required by consumption.

11. Moulding composition according to at least one of the preceding claims, **characterized in that** the at least one (meth)acrylic polymer according to II. comprises, in each case based on its total weight,

a) from 52.0 to 100.0% by weight of alkyl methacrylate repeating units having from 1 to 20 carbon atoms in the alkyl moiety,
b) from 0.0 to 40.0% by weight of alkyl acrylate repeating units having from 1 to 20 carbon atoms in the alkyl moiety and
c) from 0.0 to 8.0% by weight of styrenic repeating units of the general formula (I),

where the percentages by weight give a total of 100.0% by weight.

12. Moulding composition according to at least one of the preceding claims, **characterized in that** the moulding composition comprises styrene-acrylonitrile copolymers in accordance with III., where the styrene-acrylonitrile copolymers were obtained by polymerization of a mixture composed of

from 70 to 92% by weight of styrene,
from 8 to 30% by weight of acrylonitrile and
from 0 to 22% by weight of other comonomers, based in each case on the total weight of the mixture.

13. Moulding composition according to at least one of the preceding claims, **characterized in that** the moulding composition comprises, based on its total weight, from 0.1 to 10.0% by weight of another polymerizate as additive in accordance with IV., which has a weight-average molecular weight that is higher by at least 10% than that of the at least one (meth)acrylic polymer according to II.

14. Moulded item obtainable from a moulding composition according to at least one of Claims 1 to 13.

15. Moulded item according to Claim 14, **characterized in that** the moulded item

a. has a Charpy impact resistance in accordance with ISO 179 of at least 40.0 kJ/m$^2$, preferably of at least 60.0 kJ/m$^2$, with preference of at least 80.0 kJ/m$^2$, at 23°C and
b. has a haze in accordance with ASTM D1003 (1997) of at most 15.0% at 80°C, preferably of at most 10.0% at 80°C, with preference of at most 8% at 80°C, with more preference of at most 5% at 80°C.

**16.** Use of a moulding composition according to at least one of Claims 1 to 13 for the production of glazing, preferably of glazing of motor vehicles and/or of rail vehicles, or of buildings or machines.

**17.** Use of a moulded item according to Claim 14 or 15 as glazing, preferably as glazing of motor vehicles and/or of rail vehicles, or of buildings or machines.

**18.** Use of a moulding composition according to at least one of Claims 1 to 13 for the production of displays for communication devices, in particular for PDAs, for mobile telephones, or for cellphones, preferably smartphones; tablet PCs; TV devices; kitchen devices and other electronic devices.

**19.** Use of a moulded item according to Claim 14 or 15 as display for a communication device, in particular a PDA, a mobile telephone, a cellphone, preferably a smartphone; a TV device; a tablet PC; a kitchen device or any other electronic device.

**20.** Use of a moulding composition according to at least one of Claims 1 to 13 for the production of lamp covers, preferably for room lighting systems or automobile lighting equipment.

**21.** Use of a moulded item according to Claim 14 or 15 as lamp cover, preferably for room lighting systems or automobile lighting equipment.

## Revendications

**1.** Matière à mouler contenant, chaque fois par rapport à son poids total :

I. 10,0 à 50,0 % en poids, de préférence 15,0 à 45,0 % en poids, de façon plus particulièrement préférée 20,0 à 40 % en poids, d'au moins une particule à noyau-enveloppe-enveloppe produite ou pouvant être produite selon un procédé dans lequel

a) on dispose au préalable de l'eau et un émulsifiant,
b) on ajoute 20,0 à 45,0 parties en poids d'une première composition contenant :

A) 50,0 à 99,9 parties en poids, de préférence 71,0 à 99,9 parties en poids, de méthacrylates d'alkyle ayant de 1 à 20 atomes de carbone dans le radical alkyle,
B) 0,0 à 40,0 parties en poids, de préférence 0,0 à 29,0 parties en poids, d'acrylates d'alkyle ayant de 1 à 20 atomes de carbone dans le radical alkyle,
C) 0,1 à 10,0 parties en poids de monomères réticulants et
D) 0,0 à 8,0 parties en poids de monomères styréniques de formule générale (I)

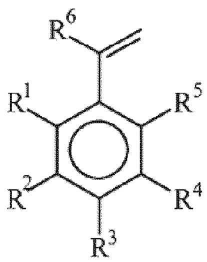

(I)

dans laquelle les radicaux $R^1$ à $R^5$ représentent chacun, indépendamment les uns des autres, un atome d'hydrogène, un atome d'halogène, un groupe alkyle en $C_1$-$C_6$ ou un groupe alcényle en $C_2$-$C_6$ et le radical $R^6$ est un atome d'hydrogène ou un groupe alkyle ayant de 1 à 6 atomes de carbone,

et on polymérise jusqu'à un taux de conversion d'au moins 85,0 % en poids, par rapport au poids total des composants A), B), C) et D),

c) on ajoute 35,0 à 55,0 parties en poids d'une deuxième composition contenant :

E) 80,0 à 100,0 parties en poids de (méth)-acrylates
F) 0,05 à 5,0 parties en poids de monomères réticulants et
G) 0,0 à 25,0 parties en poids de monomères styréniques de formule générale (I),

et on polymérise jusqu'à un taux de conversion d'au moins 85,0 % en poids, par rapport au poids total des composants E), F) et G),
d) on ajoute 10,0 à 30,0 parties en poids d'une troisième composition contenant :

H) 50,0 à 100,0 parties en poids de méthacrylates d'alkyle ayant de 1 à 20 atomes de carbone dans le radical alkyle,
I) 0,0 à 40,0 parties en poids d'acrylates d'alkyle ayant de 1 à 20 atomes de carbone dans le radical alkyle et
J) 0,0 à 10,0 parties en poids de monomères styréniques de formule générale (I),

et on polymérise jusqu'à un taux de conversion d'au moins 85,0 % en poids, par rapport au poids total des composants H), I) et J),

la somme des parties en poids indiquées des compositions b), c) et d) étant égale à 100,0 parties en poids, les proportions relatives de toutes les substances A) à J) étant choisies de manière à obtenir des particules à noyau-enveloppe-enveloppe ayant un rayon total, mesuré selon le procédé Coulter, dans la plage de 70,0 à 125,0 nm, de préférence dans la plage de 85,0 à 110,0 nm, de façon particulièrement préférée dans la plage de 90,0 à 105,0 nm ;
II. 1,0 à 90,0 % en poids, de préférence 1,0 à 85,0 % en poids, de façon plus particulièrement préférée 1,0 à 80,0 % en poids, d'au moins un polymère (méth)acrylique,
III. 0,0 à 45 % en poids, de préférence 0,0 à 30 % en poids, de façon particulièrement préférée 0,0 à 10,0 % en poids, de copolymères styrène-acrylonitrile, et
IV. 0,0 à 10,0 % en poids d'autres additifs

la somme des pour cent en poids des composants I) à IV) étant égale à 100,0 % en poids et II. ou le mélange de II, III et/ou IV étant choisi de manière à présenter un indice de réfraction qui, dans une mesure selon ASTM D 542, ne diffère pas de plus de 0,01, de préférence pas de plus de 0,002, de façon particulièrement préférée pas de plus de 0,001 unité de l'indice de réfraction de I.

2. Matière à mouler selon la revendication 1, **caractérisée en ce que** dans le procédé selon I. on effectue chaque polymérisation à une température dans la plage de plus de 60 à moins de 90 °C ou on amorce chaque polymérisation par un système d'amorceur redox.

3. Matière à mouler selon au moins l'une quelconque des revendications précédentes, **caractérisée en ce que** dans le procédé pour l'obtention de I. on amorce la polymérisation dans les étapes b) à d) en utilisant un peroxodisulfate, de préférence en utilisant du peroxodisulfate d'ammonium et/ou de métal alcalin.

4. Matière à mouler selon au moins l'une quelconque des revendications précédentes, **caractérisée en ce que** la matière à mouler a

a. une résistance au choc Charpy selon ISO 179 d'au moins 40,0 kJ/$m^2$, de préférence d'au moins 60,0 kJ/$m^2$, de façon particulièrement préférée d'au moins 80,0 kJ/$m^2$, à 23 °C et
b. un voile selon ASTM D 1003 (1997) d'au maximum 15,0 % à 80 °C, de préférence d'au maximum 10,0 % à 80 °C, de façon particulièrement préférée d'au maximum 8,0 % à 80 °C, de façon plus particulièrement préférée d'au maximum 5,0 % à 80 °C.

5. Matière à mouler selon au moins l'une quelconque des revendications précédentes, **caractérisée en ce que** dans le procédé pour l'obtention de I. on dispose au préalable 90,00 à 99,99 parties en poids d'eau et 0,01 à 10,00 parties en poids d'émulsifiant, la somme des parties en poids indiquées étant égale à 100,00 parties en poids.

**6.** Matière à mouler selon au moins l'une quelconque des revendications précédentes, **caractérisée en ce que** dans le procédé pour l'obtention de I. on utilise des émulsifiants anioniques ou des émulsifiants non ioniques.

**7.** Matière à mouler selon au moins l'une quelconque des revendications précédentes, **caractérisée en ce que** dans le procédé pour l'obtention de I. on dispose au préalable une émulsion aqueuse qui contient un latex d'ensemencement.

**8.** Matière à mouler selon la revendication 7, dans laquelle on dispose au préalable un latex d'ensemencement qui présente un diamètre de particule, mesuré selon le procédé Coulter, dans la plage de 10,0 à 40,0 nm.

**9.** Matière à mouler selon au moins l'une quelconque des revendications 1 à 6, **caractérisée en ce que** dans le procédé pour l'obtention de I. on dispose au préalable une émulsion aqueuse qui contient un alcool alkylique ayant de 12 à 20 atomes de carbone dans le radical alkyle.

**10.** Matière à mouler selon au moins l'une quelconque des revendications précédentes, **caractérisée en ce que** dans le procédé pour l'obtention de I. on ajoute par addition dosée, en fonction de la consommation, le deuxième et le troisième mélange de monomères.

**11.** Matière à mouler selon au moins l'une quelconque des revendications précédentes, **caractérisée en ce que** ledit au moins un polymère (méth)acrylique selon II. comprend, chaque fois par rapport à son poids total,

a) 52,0 à 100,0 % en poids de motifs répétitifs méthacrylate d'alkyle ayant de 1 à 20 atomes de carbone dans le radical alkyle,
b) 0,0 à 40,0 % en poids de motifs répétitifs acrylate d'alkyle ayant de 1 à 20 atomes de carbone dans le radical alkyle et
c) 0,0 à 8,0 % en poids de motifs répétitifs styréniques de formule générale (I),

la somme des pour cent en poids étant égale à 100,0 % en poids.

**12.** Matière à mouler selon au moins l'une quelconque des revendications précédentes, **caractérisée en ce que** la matière à mouler contient des copolymères styrène-acrylonitrile selon III., les copolymères styrène-acrylonitrile ayant été obtenus par polymérisation d'un mélange qui est constitué de

70 à 92 % en poids de styrène
8 à 30 % en poids d'acrylonitrile et
0 à 22 % en poids d'autres comonomères, chaque fois par rapport au poids total du mélange.

**13.** Matière à mouler selon au moins l'une quelconque des revendications précédentes, **caractérisée en ce que** la matière à mouler contient par rapport à son poids total 0,1 à 10,0 % en poids d'un autre polymérisat en tant qu'additif selon IV., qui présente, par comparaison avec ledit au moins un polymère (méth)acrylique selon II., une moyenne en poids de la masse moléculaire supérieure d'au moins 10 %.

**14.** Article moulé pouvant être obtenu à partir d'une matière à mouler selon au moins l'une quelconque des revendications 1 à 13.

**15.** Article moulé selon la revendication 14, **caractérisé en ce que** l'article moulé a

a. une résistance au choc Charpy selon ISO 179 d'au moins 40,0 kJ/$m^2$, de préference d'au moins 60,0 kJ/$m^2$, de façon particulièrement préférée d'au moins 80,0 kJ/$m^2$, à 23 °C et
b. un voile selon ASTM D 1003 (1997) d'au maximum 15,0 % à 80 °C, de préference d'au maximum 10,0 % à 80 °C, de façon particulièrement préférée d'au maximum 8,0 % à 80 °C, de façon plus particulièrement préférée d'au maximum ; 5 % à 80 °C.

**16.** Utilisation d'une matière à mouler selon au moins l'une quelconque des revendications 1 à 13, pour la fabrication de vitrages, de préference de vitrages de véhicules automobiles et/ou de véhicules sur rail, de bâtiments ou de machines.

**17.** Utilisation d'un article moulé selon l'une quelconque des revendications 14 et 15 en tant que vitrage, de préférence

en tant que vitrage de véhicules automobiles et/ou de véhicules sur rail, de bâtiments ou de machines.

**18.** Utilisation d'une matière à mouler selon au moins l'une quelconque des revendications 1 à 13, pour la fabrication d'afficheurs pour appareils de communication, en particulier des assistants personnels numériques, des téléphones mobiles, des téléphones portables, de préférence des smartphones ; des ordinateurs personnels-tablettes ; des téléviseurs ; des appareils de cuisine et d'autres appareils électroniques.

**19.** Utilisation d'un article moulé selon l'une quelconque des revendications 14 et 15, en tant qu'd'afficheur pour un appareil de communication, en particulier un assistant personnel numérique, un téléphone mobile, un téléphone portable, de préférence un smartphone ; un téléviseur ; un ordinateur personnel-tablette ; un appareil de cuisine ou un autre appareil électronique.

**20.** Utilisation d'une matière à mouler selon au moins l'une quelconque des revendications 1 à 13, pour la fabrication de caches de luminaires, de préférence pour des éclairages de pièces ou des dispositifs d'éclairage d'automobiles.

**21.** Utilisation d'un article moulé selon l'une quelconque des revendications 14 et 15, en tant que cache de luminaire, de préférence pour des éclairages de pièces ou des dispositifs d'éclairage d'automobiles.

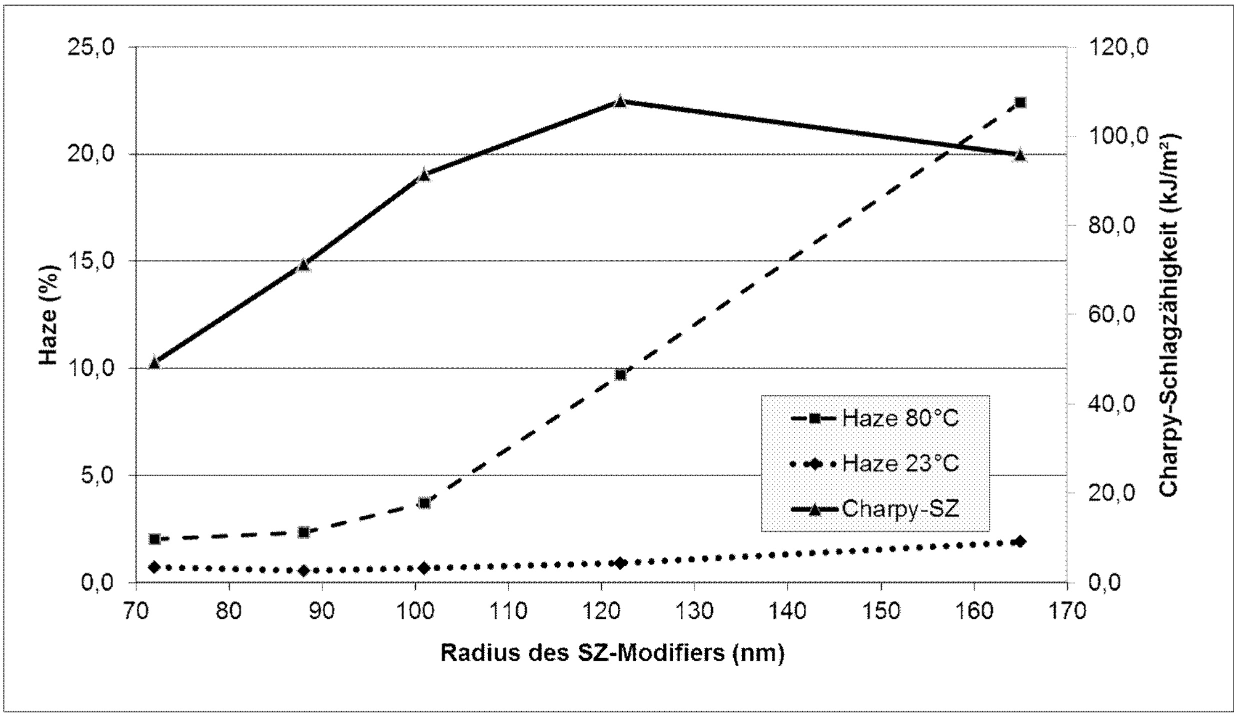
25,0
20,0
15,0
10,0
5,0
0,0
Haze (%)
120,0
100,0
80,0
60,0
40,0
20,0
0,0
Charpy-Schlagzähigkeit (kJ/m²)
70
80
90
100
110
120
130
140
150
160
170
Radius des SZ-Modifiers (nm)
Haze 80°C
Haze 23°C
Charpy-SZ

Fig. 1

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 3793402 A
- DE 4121652 A1
- DE 4136993 A1
- EP 0828772 B1
- DE 10027402 A1
- WO 2004056893 A
- DE 3343766
- DE 3210891
- DE 2850105
- DE 2742178
- DE 3701579
- DE 2750682 A1
- US 4110843 A


### In der Beschreibung aufgeführte Nicht-Patentliteratur


- *Nachr. Chem. Tech. Lab.,* 1995, vol. 43, 553-566
- **H. RAUCH-PUNTIGAM ; TH. VÖLKER.** Acryl- und Methacrylverbindungen. Springer, Heidelberg, 1967
- **HOUBEN-WEYL.** Methoden der organischen Chemie. Georg Thieme, Heidelberg, 1961, vol. XIV/1, 66
- **KIRK-OTHMER.** Encyclopedia of Chemical Technology. J. Wiley, New York, 1978, vol. 1, 29611
- **NACH FOX T. G.** *Bull. Am. Physics Soc.,* 1956, vol. 1 (3), 123
- Fachmann dem Polymer Handbook. J. Wiley & Sons, New York, 1975